# EUROPEAN PATENT APPLICATION

(11) **EP 4 819 333 A1**
(43) Date of publication of application: **07.10.2026**
(21) Application number: 24914895.8
(22) Date of filing: 19.09.2024
(51) Int. Cl.: H01M 50/264

(54) **LOCKING MECHANISM, BATTERY ASSEMBLY, ELECTRICAL DEVICE AND LOCKING APPARATUS**

(30) Priority: 02.01.2024 CN 202420013041 U
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN); YOU, Kaijie, Ningde, Fujian 352100 (CN); CAO, Gen, Ningde, Fujian 352100 (CN); LIU, Bin, Ningde, Fujian 352100 (CN); LIN, Baiqing, Ningde, Fujian 352100 (CN)
(74) Representative: Ran, Handong
(86) International application number: PCT/CN2024/119846
(87) International publication number: WO 2025/145673

(57) **Abstract**

A locking mechanism, a battery assembly, an electrical device and a locking apparatus, belonging to the technical field of battery swapping. The locking mechanism (10) comprises a sleeve (11), a locking member (12) and an adjustment member (13). The locking member (12) is movably arranged on the sleeve (11), the locking member (12) is configured to be snap-fitted with a lock seat (300) when being in a locked state, and the locking member (12) is configured to release the snap-fit connection with the lock seat (300) when being in an unlocked state. The adjustment member (l3) is rotatably connected inside the sleeve (11), and the adjustment member (l3) is configured to, when rotating relative to the sleeve (11), drive the locking member (12) to move relative to the sleeve (11), such that the locking member (12) is switched between a locked state and an unlocked state. The locking member (12) comprises a connection part (l21) and a snap-fit part (122) connected to each other, the connection part (121) being provided with a first connection section (1211) and a second connection section (1212) arranged in a first direction, the first connection section (1211) being in threaded connection with the adjustment member (13), the snap-fit part (122) being connected to the end of the second connection section (1212) away from the first connection section (1211), the snap-fit part (122) being used for snap-fit connection with the lock seat (300), and the diameter of the first connection section (1211) being greater than that of the second connection section (1222).

## Description

### CROSS-REFERENCE TO RELATED APPLICATIONS

This application claims priority to the Chinese patent application No. 2024200130413, filed on January 2, 2024 and entitled "LOCKING MECHANISM, BATTERY ASSEMBLY, ELECTRIC DEVICE, AND LOCKING APPARATUS", which is incorporated herein by reference in its entirety.

### TECHNICAL FIELD

This application relates to the field of battery swapping technology, and specifically relates to a locking mechanism, a battery assembly, an electric device, and a locking apparatus.

### BACKGROUND

With the progress of science and technology, the battery industry has developed rapidly, and the market share and usage frequency of electric devices are also increasing. Electrically driven transportation means such as electric vehicles have gradually appeared in various application scenarios. In addition, to improve the convenience of electric devices, especially electrically driven transportation means, battery swapping stations for quick battery replacement have appeared on the market. However, electric devices need to perform battery swapping actions frequently. In the battery swapping process, a locking mechanism between the battery and the electric device needs to switch multiple times between locking and unlocking to secure and separate the battery from the electric device, and the locking mechanism needs to bear the weight of the battery, thereby causing the locking mechanism to be prone to wear or damage, resulting in problems such as short service life and poor operational reliability of the locking mechanism, which in turn leads to inconvenience in battery swapping and safety hazards in use.

### SUMMARY

Embodiments of this application provide a locking mechanism, a battery assembly, an electric device, and a locking apparatus, which can effectively improve the service life and operational reliability of the locking mechanism.

According to a first aspect, embodiments of this application provide a locking mechanism configured to be engaged with or disengaged from a lock base along a first direction, where the locking mechanism includes a sleeve, a locking member, and an adjustment member; the locking member is movably disposed in the sleeve, the locking member has a locked state and an unlocked state, the locking member is configured to be snap-fitted with the lock base when in the locked state, so that the locking mechanism is engaged with the lock base along the first direction, and the locking member is configured to be disengaged from the lock base when in the unlocked state, so as to allow the locking mechanism to be disengaged from the lock base along the first direction; and the adjustment member is rotatably connected inside the sleeve around an axis extending along the first direction, and the adjustment member is configured to, when rotating relative to the sleeve, drive the locking member to move relative to the sleeve, so that the locking member is switched between the locked state and the unlocked state; where the locking member includes a connecting portion and a snap-fit portion connected to each other, the connecting portion has a first connecting section and a second connecting section arranged along the first direction, the first connecting section is threadedly connected to the adjustment member, the snap-fit portion is connected to an end of the second connecting section away from the first connecting section, the snap-fit portion is configured to be snap-fitted with the lock base, and a diameter of the first connecting section is greater than a diameter of the second connecting section.

In the above technical solution, the locking mechanism is provided with the locking member and the adjustment member, where the locking member includes the connecting portion and the snap-fit portion. The first connecting section of the connecting portion is threadedly connected to the adjustment member, so that when the adjustment member is rotated, the connecting portion can be driven to move relative to the sleeve, so as to further drive the snap-fit portion to rotate around the axis extending along the first direction, so that the locking member is switched between the locked state and the unlocked state, and the snap-fit portion can be engaged with or disengaged from the lock base, thereby allowing the locking mechanism to be engaged with or disengaged from the lock base along the first direction. The diameter of the first connecting section of the connecting portion configured to be threadedly connected to the adjustment member is set to be greater than the diameter of the second connecting section, so that the structural strength of the first connecting section of the connecting portion can be improved, and a thread depth of the first connecting section can be further increased. This can improve the structural strength of a region of the connecting portion provided with threads, enhancing the load-bearing capacity, thereby reducing the risk of fracture of the connecting portion during use. In addition, this can improve the structural stability of the threaded connection between the first connecting section and the adjustment member, helping to alleviate the phenomenon of thread slippage or thread structure damage between the connecting portion of the locking member and the adjustment member, and reducing the risk of threaded connection failure between the locking member and the adjustment member, thereby helping to improve the service life and operational reliability of the locking mechanism.

In some embodiments, the first connecting section includes a body portion and a first external thread, the body portion is connected to one end of the second connecting section, the first external thread protrudes from an outer circumferential surface of the body portion, and an outer diameter of the first external thread is the diameter of the first connecting section; and a first internal thread is provided on an inner circumferential surface of the adjustment member, and the first internal thread is configured to fit the first external thread.

In the above technical solution, the first connecting section is provided with the body portion and the first external thread, and the first external thread is a structure protruding from the outer circumferential surface of the body portion. Correspondingly, the first internal thread fitting the first external thread is provided on the inner circumferential surface of the adjustment member, so that the first connecting section is inserted into an inner side of the adjustment member; and the adjustment member is a structure threadedly connected to an outer side of the first connecting section. This helps to set the body portion of the first connecting section as a solid structure, further improving the structural strength of the first connecting section of the connecting portion, thereby reducing the risk of fracture of the connecting portion during use.

In some embodiments, a diameter of the body portion is greater than or equal to a diameter of the second connecting section.

In the above technical solution, the diameter of the body portion of the first connecting section is set to be greater than or equal to the diameter of the second connecting section, so that a diameter of a region of the first connecting section not provided with the first external thread is also greater than or equal to the diameter of the second connecting section, helping to improve the overall structural strength of the first connecting section, thereby reducing the risk of fracture of the first connecting section of the connecting portion during use.

In some embodiments, the snap-fit portion is detachably connected to the second connecting section.

In the above technical solution, the snap-fit portion of the locking member is configured to be detachably connected to the second connecting section of the connecting portion, so that the locking member can be assembled by inserting an end of the connecting portion provided with the snap-fit portion into the sleeve, and then the snap-fit portion is assembled to the second connecting section of the connecting portion. That is, the second connecting section of the connecting portion is first inserted into the sleeve, and then the snap-fit portion is connected to the second connecting section. Through the locking mechanism with such structure, the assembly difficulty between the locking member and the sleeve can be reduced, and it is only necessary to set a diameter of an assembly hole at an end of the sleeve close to the snap-fit portion in the first direction to match the diameter of the second connecting section of the connecting portion, without needing to enlarge the diameter of the assembly hole at the end of the sleeve close to the snap-fit portion in the first direction to allow the first connecting section with a large diameter of the connecting portion to pass through. This helps to reduce an assembly gap between the second connecting section of the connecting portion and the sleeve, alleviating the phenomenon of shaking of the locking mechanism during use, and reducing the risk of impurities entering the sleeve through the gap between the second connecting section and the sleeve, thereby effectively improving the service life and operational reliability of the locking mechanism.

In some embodiments, the snap-fit portion is sleeved on an outer side of the second connecting section, and the snap-fit portion is threadedly connected to the second connecting section.

In the above technical solution, the snap-fit portion is sleeved on the outer side of the second connecting section, and the snap-fit portion and the second connecting section of the connecting portion are connected through a threaded connection structure, helping to reduce the assembly difficulty between the snap-fit portion and the connecting portion, and improving the structural stability and reliability of the snap-fit portion connected to the connecting portion.

In some embodiments, the snap-fit portion is located outside the sleeve, the snap-fit portion protrudes from an outer circumferential surface of the connecting portion along its extending direction, and the extending direction of the snap-fit portion is perpendicular to the first direction; and the adjustment member can drive the connecting portion to rotate by rotating relative to the sleeve, so that the snap-fit portion is snap-fitted with or disengaged from the lock base, and the locking member is switched between the locked state and the unlocked state.

In the above technical solution, the snap-fit portion is disposed on an outer side of the sleeve, and the snap-fit portion protrudes from the outer circumferential surface of the connecting portion along its extending direction, so that the adjustment member can drive the connecting portion to rotate when rotating, and the snap-fit portion can rotate with the connecting portion. This allows the snap-fit portion to be snap-fitted with or disengaged from the lock base after the extending direction of the snap-fit portion changes in a plane perpendicular to the first direction, thereby allowing the locking mechanism to be engaged with or disengaged from the lock base in the first direction. Such a structure is simple and convenient to use.

In some embodiments, the sleeve is provided with a first limiting portion, the connecting portion is provided with a second limiting portion, and the first limiting portion and the second limiting portion fit to limit a rotation angle of the connecting portion.

In the above technical solution, the sleeve and the connecting portion are correspondingly provided with the first limiting portion and the second limiting portion respectively, so that the first limiting portion and the second limiting portion can fit to limit the rotation angle of the connecting portion, and under the cooperative limitation of the first limiting portion and the second limiting portion, the connecting portion can drive the snap-fit portion to be snap-fitted with or disengaged from the lock base, thereby facilitating switching of the locking member between the locked state and the unlocked state, and making the structure simple and convenient to operate. In addition, this can alleviate the phenomenon that the snap-fit portion cannot be snap-fitted with the lock base due to an excessive rotation angle of the snap-fit portion following the connecting portion, helping to improve the reliability of mutual locking between the locking mechanism and the lock base.

In some embodiments, the first limiting portion and the second limiting portion are further configured to fit to guide the connecting portion to move along the first direction when the adjustment member rotates relative to the sleeve, so that the locking member moves between a first position and a second position along the first direction; when the locking member is located at the first position, the locking member is in the locked state, so that the snap-fit portion is able to be snap-fitted with the lock base; and when the locking member is located at the second position, the locking member is in the unlocked state, so that the snap-fit portion is able to be disengaged from the lock base.

In the above technical solution, the first limiting portion and the second limiting portion can limit the rotation angle of the connecting portion and also fit to guide the connecting portion to move relative to the sleeve in the first direction, so that the adjustment member can drive the connecting portion to rotate relative to the sleeve and also drive the locking member to move between the first position and the second position along the first direction, thereby allowing the adjustment member to drive the snap-fit portion to be snap-fitted with the lock base and also drive the snap-fit portion to abut against the lock base, reducing a gap size between the snap-fit portion and the lock base, and reducing the phenomenon of vibration between the locking mechanism and the lock base.

In some embodiments, the first limiting portion is a limiting groove provided on the inner circumferential surface of the sleeve, the second limiting portion is a protrusion protruding from the outer circumferential surface of the connecting portion, and the protrusion is at least partially accommodated in the limiting groove.

In the above technical solution, the first limiting portion and the second limiting portion are respectively the limiting groove provided on the inner circumferential surface of the sleeve and the protrusion provided on the outer circumferential surface of the connecting portion. The protrusion is inserted into the limiting groove, the limiting groove limits the rotation angle of the connecting portion, and the protrusion can be guided by the limiting groove to allow the connecting portion to move relative to the sleeve along the first direction while rotating relative to the sleeve, making the structure simple and easy to implement and have high stability.

In some embodiments, the limiting groove includes a first groove section, a second groove section, and a third groove section connected in sequence, the first groove section and the third groove section both extend along the first direction, the first groove section and the third groove section are spaced apart along a circumferential direction of the connecting portion, the first groove section and the third groove section are spaced apart along the first direction, and along the first direction, the third groove section is closer to the snap-fit portion than the first groove section; and when the locking member is located at the first position, the protrusion is located in the first groove section, and when the locking member is located at the second position, the protrusion is located in the third groove section.

In the above technical solution, the first groove section and the third groove section of the limiting groove are configured to both extend along the first direction, and the first groove section and the third groove section are spaced apart in both the first direction and the circumferential direction of the connecting portion, so that the second groove section is a helical groove connected between the first groove section and the third groove section. Thus, when the protrusion of the connecting portion is located in the first groove section and the third groove section, the protrusion of the connecting portion can only move along the first direction following the extending directions of the first groove section and the second groove section; and when the protrusion of the connecting portion is located in the second groove section, the protrusion of the connecting portion can rotate relative to the sleeve and move relative to the sleeve along the first direction following the extending direction of the second groove section. This achieves limitation of the rotation angle of the locking member and movement of the locking member between the first position and the second position along the first direction. In addition, the third groove section is disposed closer to the snap-fit portion than the first groove section in the first direction, so that when the protrusion is located in the first groove section, the snap-fit portion can be snap-fitted with the lock base and is closer to the sleeve, thereby allowing the snap-fit portion to abut against the lock base in the first direction.

In some embodiments, the limiting groove runs through an outer circumferential surface of the sleeve along a radial direction of the sleeve.

In the above technical solution, the limiting groove is configured to run through the inner circumferential surface of the sleeve to the outer circumferential surface of the sleeve. Thus, the limiting groove can be processed from the outer circumferential surface of the sleeve, helping to reduce the difficulty of providing the limiting groove on the sleeve. In addition, a depth of the limiting groove can be increased, thereby improving the stability of the cooperation between the protrusion on the connecting portion and the limiting groove.

In some embodiments, the locking mechanism further includes an anti-loosening assembly, where the anti-loosening assembly is disposed between the sleeve and the adjustment member, and the anti-loosening assembly is configured to selectively lock the adjustment member to the sleeve, so as to limit rotation of the adjustment member relative to the sleeve.

In the above technical solution, the locking mechanism is further provided with the anti-loosening assembly. By disposing the anti-loosening assembly between the sleeve and the adjustment member, the adjustment member can be selectively locked to the sleeve. That is, when the anti-loosening assembly releases the sleeve and the adjustment member, the anti-loosening assembly can allow the adjustment member to rotate relative to the sleeve, so as to drive the locking member to move relative to the sleeve, so that the locking member is snap-fitted with or disengaged from the lock base. In addition, when the anti-loosening assembly locks the sleeve and the adjustment member, the anti-loosening assembly can limit rotation of the adjustment member relative to the sleeve, thereby alleviating the phenomenon of snap-fit failure between the locking member and the lock base due to unintended rotation of the adjustment member, improving the locking effect between the locking member and the lock base, and helping to improve the stability and reliability of mutual locking between the locking mechanism and the lock base.

In some embodiments, the anti-loosening assembly includes a first clutch member and a second clutch member, where the first clutch member is disposed in the sleeve; the second clutch member is disposed on the adjustment member; and the first clutch member and the second clutch member are configured to: limit rotation of the adjustment member relative to the sleeve when snap-fitted with each other; and allow rotation of the adjustment member relative to the sleeve when disengaged from each other.

In the above technical solution, the anti-loosening assembly is provided with the first clutch member and the second clutch member that can be snap-fitted with or disengaged from each other, and the first clutch member and the second clutch member are respectively disposed in the sleeve and the adjustment member, so that rotation of the adjustment member relative to the sleeve can be limited when the first clutch member and the second clutch member are snap-fitted with each other, and rotation of the adjustment member relative to the sleeve can be allowed when the first clutch member and the second clutch member are disengaged from each other, thereby achieving the function of the anti-loosening assembly in selectively locking the adjustment member to the sleeve.

In some embodiments, the first clutch member and the second clutch member are arranged along the first direction, the first clutch member is fixed to the sleeve, the second clutch member is circumferentially locked to the adjustment member, and the second clutch member is movably disposed on the adjustment member along the first direction, so that the second clutch member is able to be snap-fitted with or disengaged from the first clutch member.

In the above technical solution, the first clutch member and the second clutch member are arranged along the first direction, and the second clutch member is movably disposed on the adjustment member along the first direction. The first clutch member is fixed to the sleeve, and the second clutch member is configured as a structure circumferentially locked to the adjustment member, so that the second clutch member can be snap-fitted with or disengaged from the first clutch member by moving the second clutch member, thereby limiting rotation of the adjustment member relative to the sleeve or allowing rotation of the adjustment member relative to the sleeve. The anti-loosening assembly with such structure is simple in structure and convenient to operate and implement.

In some embodiments, the adjustment member has a guide section, and the second clutch member is movably sleeved on an outer side of the guide section along the first direction; and a cross-section of the guide section perpendicular to the first direction is polygonal, and an outer circumferential surface of the guide section fits an inner circumferential surface of the second clutch member, so that the second clutch member is circumferentially locked to the adjustment member.

In the above technical solution, the guide section of the adjustment member is configured as a structure with a polygonal cross-section perpendicular to the first direction, the second clutch member is movably sleeved on the outer side of the guide section along the first direction, and the inner circumferential surface of the second clutch member is configured to fit the outer circumferential surface of the guide section, so that a projection shape of the inner circumferential surface of the second clutch member along the first direction is the same as the shape of the cross-section of the guide section perpendicular to the first direction, where the projection shape and the shape of the cross-section are both polygonal. Thus, the second clutch member can be circumferentially locked to the adjustment member but can move relative to the adjustment member along the first direction, making the structure simple and convenient to manufacture.

In some embodiments, along the first direction, an end of the first clutch member facing the second clutch member is provided with a first toothed portion, an end of the second clutch member facing the first clutch member is provided with a second toothed portion, and the second toothed portion is configured to be meshed with the first toothed portion, so that the second clutch member is snap-fitted with the first clutch member.

In the above technical solution, the end of the first clutch member facing the second clutch member is provided with the first toothed portion. Correspondingly, the end of the second clutch member facing the first clutch member is provided with the second toothed portion, so that when the second clutch member moves along the first direction, the second toothed portion can be meshed with or disengaged from the first toothed portion. Thus, the second clutch member is snap-fitted with or disengaged from the first clutch member, so that when the first toothed portion and the second toothed portion are meshed with each other, the first clutch member and the second clutch member can fit to limit rotation of the adjustment member relative to the sleeve, making the structure simple and convenient to implement. In addition, through the structure where the first clutch member and the second clutch member are respectively provided with the first toothed portion and the second toothed portion, the difficulty in engagement and disengagement of the first clutch member and the second clutch member can be reduced, thereby helping the first clutch member and the second clutch member to be snap-fitted with or disengaged from each other.

In some embodiments, along the first direction, the end of the first clutch member facing the second clutch member is provided with a first inclined surface, the end of the second clutch member facing the first clutch member is provided with a second inclined surface, and the second inclined surface fits the first inclined surface; where the first toothed portion is disposed on the first inclined surface, and the second toothed portion is disposed on the second inclined surface.

In the above technical solution, the end of the first clutch member facing the second clutch member is provided with the first inclined surface, and the first toothed portion is disposed on the first inclined surface. Correspondingly, the end of the second clutch member facing the first clutch member is provided with the second inclined surface fitting the first inclined surface, and the second toothed portion is disposed on the second inclined surface. With this structure, the first toothed portion and the second toothed portion may be inclined structures fitting each other, thereby providing a certain guiding effect, and helping the first toothed portion to be meshed with the second toothed portion.

In some embodiments, the first inclined surface is a concave surface provided on the first clutch member, and the second inclined surface is a convex surface provided on the second clutch member.

In the above technical solution, the first inclined surface is set as the concave surface, and the second inclined surface is set as the convex surface, so that when the second toothed portion of the second clutch member is meshed with the first toothed portion of the first clutch member, the second clutch member can be inserted into the first clutch member, thereby helping to improve the stability and reliability of mutual engagement between the second clutch member and the first clutch member, and reducing the phenomenon of slippage during mutual engagement between the second clutch member and the first clutch member.

In some embodiments, the anti-loosening assembly further includes an elastic member, where the elastic member is disposed between the sleeve and the second clutch member, and the elastic member is configured to drive the second clutch member to move along the first direction toward the first clutch member, so that the second clutch member is snap-fitted with the first clutch member.

In the above technical solution, the anti-loosening assembly is further provided with the elastic member, the elastic member is disposed between the sleeve and the second clutch member, and the elastic member can apply a force to the second clutch member along the first direction toward the first clutch member, so that the first clutch member is snap-fitted with the second clutch member. The anti-loosening assembly with such structure can further improve the stability of mutual engagement between the first clutch member and the second clutch member, thereby reducing the phenomenon of unintended disengagement between the first clutch member and the second clutch member. In addition, after the second clutch member and the first clutch member are disengaged from each other, the elastic member can achieve automatic engagement between the second clutch member and the first clutch member without manual intervention, facilitating operation and use.

In some embodiments, the adjustment member has a guide section, and the second clutch member is movably sleeved on an outer side of the guide section along the first direction; and the elastic member is sleeved on the outer side of the guide section, and two ends of the elastic member in the first direction abut against the adjustment member and the second clutch member respectively.

In the above technical solution, the elastic member is configured as a structure sleeved on the outer side of the guide section of the adjustment member, and the second clutch member is movably sleeved on the outer side of the guide section along the first direction. This helps the elastic member to apply an elastic force to the second clutch member, thereby helping the elastic member to drive the second clutch member to move along the first direction toward the first clutch member. In addition, this allows the guide section to provide a certain guiding effect on the elastic member, achieving stable compression of the elastic member along the first direction, and helping to alleviate the phenomenon of radial deformation or bending of the elastic member, thereby improving the stability and reliability of the elastic member during use.

In some embodiments, a side of the lock base in the first direction is provided with a lock hole for insertion of the snap-fit portion; and the snap-fit portion has a guide inclined surface, and the guide inclined surface is configured to guide the snap-fit portion to be inserted into the lock hole.

In the above technical solution, the snap-fit portion is provided with the guide inclined surface, so that when there is a deviation during insertion of the snap-fit portion into the lock hole of the lock base, the locking member can be guided by the guide inclined surface, thereby facilitating insertion of the snap-fit portion of the locking member into the lock base, and improving the operational reliability of the locking mechanism.

According to a second aspect, embodiments of this application further provide a battery assembly including a battery and the above locking mechanism, where the locking mechanism is mounted on the battery.

According to a third aspect, embodiments of this application further provide an electric device including a lock base and the above battery assembly, where the locking mechanism is configured to be engaged with or disengaged from the lock base along the first direction, and the battery is configured to supply electrical energy.

According to a fourth aspect, embodiments of this application further provide a locking apparatus including a lock base and the above locking mechanism, where the locking mechanism is configured to be engaged with or disengaged from the lock base along the first direction.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below show merely some embodiments of this application and thus should not be considered as limitations on the scope. Those of ordinary skill in the art may still derive other related drawings from the accompanying drawings without creative efforts.
FIG. 1 is a schematic structural diagram of a vehicle according to some embodiments of this application;
FIG. 2 is a schematic diagram of a partial structure of a vehicle according to some embodiments of this application;
FIG. 3 is an exploded view of a structure of a battery according to some embodiments of this application;
FIG. 4 is a schematic structural diagram of a locking mechanism according to some embodiments of this application;
FIG. 5 is an exploded view of a structure of a locking mechanism according to some embodiments of this application;
FIG. 6 is a cross-sectional view of a locking mechanism according to some embodiments of this application;
FIG. 7 is a cross-sectional view of a locking member of a locking mechanism according to some embodiments of this application;
FIG. 8 is a schematic structural diagram of a connecting portion of a locking member of a locking mechanism according to some embodiments of this application;
FIG. 9 is a partially enlarged view of part A of the locking mechanism shown in FIG. 6;
FIG. 10 is a schematic diagram of connection between a locking mechanism and a lock base according to some embodiments of this application;
FIG. 11 is a schematic structural diagram of a sleeve of a locking mechanism according to some embodiments of this application;
FIG. 12 is a cross-sectional view of a sleeve of a locking mechanism according to some embodiments of this application;
FIG. 13 is a schematic structural diagram of a first clutch member of an anti-loosening assembly of a locking mechanism according to some embodiments of this application; and
FIG. 14 is a schematic structural diagram of a second clutch member of an anti-loosening assembly of a locking mechanism according to some embodiments of this application.

Reference signs: 1000. vehicle; 100. battery assembly; 10. locking mechanism; 11. sleeve; 111. assembly groove; 112. assembly hole; 113. snap-fit surface; 114. first limiting portion; 1141. first groove section; 1142. second groove section; 1143. third groove section; 115. third internal thread; 12. locking member; 121. connecting portion; 1211. first connecting section; 1211a. body portion; 1211b. first external thread; 1212. second connecting section; 1212a. second external thread; 1213. second limiting portion; 122. snap-fit portion; 1221. first through hole; 1222. second internal thread; 1223. guide inclined surface; 13. adjustment member; 131. assembly section; 132. guide section; 133. first internal thread; 14. limiting member; 15. anti-loosening assembly; 151. first clutch member; 1511. third external thread; 1512. first toothed portion; 1513. first inclined surface; 152. second clutch member; 1521. second through hole; 1522. second toothed portion; 1523. second inclined surface; 153. elastic member; 154. stop block; 1541. slot; 20. battery; 21. box; 211. first box body; 212. second box body; 22. battery cell; 200. mounting frame; 300. lock base; 310. lock hole; 400. controller; 500. motor; and X. first direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all embodiments of this application. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those of ordinary skill in the art to which this application belongs. The terms used in the specification of this application are only for the purpose of describing specific embodiments and are not intended to limit this application. The terms "include", "comprise", "have", and any variations thereof in the specification and claims of this application and the above description of drawings are intended to cover non-exclusive inclusions. The terms "first", "second", and the like in the specification and claims of this application or the above drawings are used to distinguish different objects, and are not used to describe a specific order or primary-secondary relationship.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that, unless otherwise clearly specified and limited, the terms "mounting", "connection", "join", "attachment" should be understood in a broad sense. For example, they may refer to a fixed connection, a detachable connection, or an integral connection, and may refer to a direct connection, an indirect connection via an intermediate medium, or an interaction between two elements. For those of ordinary skill in the art, the specific meanings of the above terms in this application can be understood according to specific situations.

The term "and/or" in this application is only an associative relationship for describing associated objects, indicating that three relationships may be present. For example, A and/or B may indicate three cases: presence of A; presence of both A and B; and presence of only B. In addition, the character "/" in this application generally indicates an "or" relationship between contextually associated objects.

In some embodiments of this application, like reference signs denote like components, and for brevity, in different embodiments, detailed descriptions of like components are not repeated. It should be understood that, as shown in the accompanying drawings, dimensions such as thicknesses, lengths, and widths of various components and dimensions such as thicknesses, lengths, and widths of integrated devices in the embodiments of this application are merely for illustrative purposes and should not constitute any limitations on this application.

"A plurality of" appearing in this application refers to two or more (including two).

In the embodiments of this application, the battery cell may be a secondary battery, and the secondary battery refers to a battery cell that can continue to be used by activating an active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, which is not limited in the embodiments of this application.

The battery cell typically includes an electrode assembly. The electrode assembly includes a positive electrode, a negative electrode, and a separator. During the charging and discharging process of the battery cell, active ions (such as lithium ions) are intercalated and deintercalated between the positive electrode and the negative electrode. The separator is disposed between the positive electrode and the negative electrode to prevent short circuits between the positive and negative electrodes and allow active ions to pass through.

In some embodiments, the positive electrode may be a positive electrode plate, and the negative electrode may be a negative electrode plate.

In some embodiments, the electrode assembly further includes a separator, and the separator is disposed between the positive electrode and the negative electrode.

In some embodiments, the separator is a separator film.

In some embodiments, the battery cell may include a housing. The housing is configured to encapsulate components such as the electrode assembly and an electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of another shape. The prismatic battery cell includes but is not limited to a square shell battery cell, a blade-shaped battery cell, a polygon prism battery. The polygon prism battery is, for example, a hexagonal prism battery.

The battery mentioned in the embodiments of this application refers to a single physical module including one or more battery cells to provide higher voltage and capacity.

In some embodiments, the battery may be a battery module. When a plurality of battery cells are provided, the plurality of battery cells are arranged and fixed to form a battery module.

In some embodiments, the battery may be a battery pack. The battery pack includes a box and a battery cell, and the battery cell or the battery module is accommodated in the box.

With the progress of science and technology, new energy vehicles have developed rapidly, and the market share and usage frequency of electric vehicles are also increasing. Electric commercial vehicles in electric vehicles, such as electric heavy trucks and electric light trucks, have gradually appeared in various application scenarios, and battery swapping stations for battery replacement of electric trucks have also been built accordingly.

In the field of new energy vehicles, since electric trucks carry heavy loads and have long mileage, their energy consumption is greater than that of ordinary passenger vehicles. Therefore, to achieve endurance, electric trucks need to perform battery swapping actions frequently. In the battery swapping process, locking and fixing as well as separation of a battery mounted on the vehicle are key concerns. To achieve locking and fixing of the battery, a main method currently adopted is to provide a lock base on the vehicle and correspondingly provide a locking mechanism on the battery. An adjustment member of the locking mechanism can drive a locking member of the locking mechanism to be locked to or unlocked from the lock base, so as to complete the battery swapping function of the vehicle. However, the locking member and adjustment member of the locking mechanism typically adopt a threaded connection structure, so that the adjustment member can drive the locking member to move or rotate, so as to implement locking or unlocking between the locking member and the lock base. In addition, the locking member needs to bear the weight of the battery, so that a thread depth provided on the locking member is limited by the structural strength requirements of the locking member, causing the locking member to be prone to fracture during use, or causing high probability of thread slippage between the locking member and the adjustment member, thus leading to the risk of connection failure between the locking member and the adjustment member, resulting in short service life and low operational reliability of the locking mechanism between the battery and the vehicle, and causing inconvenience in battery swapping of the electric device and safety hazards in use.

Based on the above considerations, to solve the technical problems such as short service life and low operational reliability of the locking mechanism between the battery and the vehicle, embodiments of this application provide a locking mechanism. The locking mechanism includes a sleeve, a locking member, and an adjustment member. The locking member is movably disposed in the sleeve. The locking member has a locked state and an unlocked state. The locking member is configured to be snap-fitted with the lock base when in the locked state, so that the locking mechanism is engaged with the lock base along a first direction. The locking member is configured to be disengaged from the lock base when in the unlocked state, so as to allow the locking mechanism to be disengaged from the lock base along the first direction. The adjustment member is rotatably connected inside the sleeve around an axis extending along the first direction. The adjustment member is configured to, when rotating relative to the sleeve, drive the locking member to move relative to the sleeve, so that the locking member is switched between the locked state and the unlocked state. The locking member includes a connecting portion and a snap-fit portion connected to each other. The connecting portion has a first connecting section and a second connecting section arranged along the first direction. The first connecting section is threadedly connected to the adjustment member. The snap-fit portion is connected to an end of the second connecting section away from the first connecting section. The snap-fit portion is configured to be snap-fitted with the lock base. A diameter of the first connecting section is greater than a diameter of the second connecting section.

In the locking mechanism with such structure, the locking mechanism is provided with the locking member and the adjustment member, where the locking member includes the connecting portion and the snap-fit portion. The first connecting section of the connecting portion is threadedly connected to the adjustment member, so that when the adjustment member is rotated, the connecting portion can be driven to move relative to the sleeve, so as to further drive the snap-fit portion to rotate around the axis extending along the first direction, so that the locking member is switched between the locked state and the unlocked state, and the snap-fit portion can be engaged with or disengaged from the lock base, thereby allowing the locking mechanism to be engaged with or disengaged from the lock base along the first direction. The diameter of the first connecting section of the connecting portion configured to be threadedly connected to the adjustment member is set to be greater than the diameter of the second connecting section, so that the structural strength of the first connecting section of the connecting portion can be improved, and a thread depth on the first connecting section can be further increased. This can improve the structural strength of a region of the connecting portion provided with threads, enhancing the load-bearing capacity, thereby reducing the risk of fracture of the connecting portion during use. In addition, this can improve the structural stability of the threaded connection between the first connecting section and the adjustment member, helping to alleviate the phenomenon of thread slippage or thread structure damage between the connecting portion of the locking member and the adjustment member, and reducing the risk of threaded connection failure between the locking member and the adjustment member, thereby helping to improve the service life and operational reliability of the locking mechanism.

The locking mechanism disclosed in the embodiments of this application may be used in, but is not limited to, electric devices such as vehicles, ships, or aircraft. A power supply system of the electric device may be formed by the locking mechanism, the battery assembly, and the like disclosed in this application. This helps to alleviate the problems such as short service life and low operational reliability of the locking mechanism, thereby improving the safety of the electric device during use.

Embodiments of this application provide an electric apparatus using a battery as a power supply. The electric apparatus may be, but is not limited to, a mobile phone, a tablet, a notebook computer, an electric toy, an electric tool, an electric bicycle, an electric vehicle, a ship, a spacecraft, and the like. The electric toy may include a fixed or mobile electric toy, such as a game console, an electric toy car, an electric toy ship, and an electric toy airplane. The spacecraft may include airplanes, rockets, space shuttles, spaceships, and the like.

For ease of description, an electric apparatus according to an embodiment of this application being a vehicle is used as an example for description of the following embodiments.

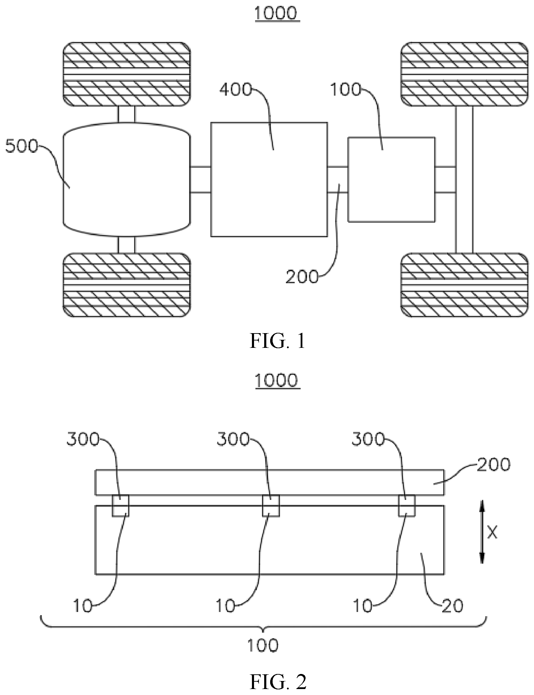

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, an extended-range electric vehicle, or the like. A battery assembly 100 is provided inside the vehicle 1000, and the battery assembly 100 may be disposed at the bottom of the vehicle 1000, at the head of the vehicle 1000, or at the tail of the vehicle 1000.

According to some embodiments of this application, referring to FIG. 2, FIG. 2 is a schematic diagram of a partial structure of a vehicle 1000 according to some embodiments of this application. The vehicle 1000 has a mounting frame 200 and a lock base 300. The lock base 300 is mounted on the mounting frame 200. The battery assembly 100 includes a locking mechanism 10 and a battery 20. The locking mechanism 10 is mounted on the battery 20. The locking mechanism 10 is configured to be locked to or unlocked from the lock base 300 to achieve battery swapping of the vehicle 1000. The battery 20 may be configured to supply power to the vehicle 1000. For example, the battery 20 may serve as an operating power supply or a usage power supply of the vehicle 1000.

Optionally, referring to FIG. 1, the vehicle 1000 may further include a controller 400 and a motor 500. The controller 400 is configured to control the battery 20 to supply power to the motor 500, for example, to satisfy power needs of start, navigation, and driving of the vehicle 1000.

In some embodiments of this application, the battery 20 can not only serve as an operating power supply or a usage power supply of the vehicle 1000, but also as a driving power supply of the vehicle 1000, replacing or partially replacing fuel or natural gas to provide driving power to the vehicle 1000.

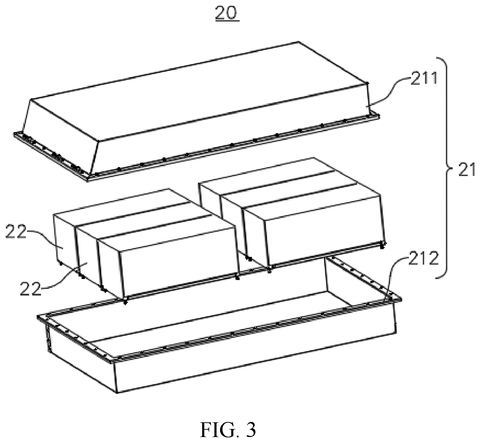

Referring to FIG. 2 and further referring to FIG. 3, FIG. 3 is an exploded view of a structure of a battery 20 according to some embodiments of this application. The battery 20 may include a box 21 and a battery cell 22. The battery cell 22 is configured to be accommodated in the box 21. The locking mechanism 10 is mounted on the box 21.

The box 21 is configured to provide an assembly space for the battery cell 22, and the box 21 may adopt various structures. In some embodiments, the box 21 may include a first box body 211 and a second box body 212. The first box body 211 and the second box body 212 fit each other, so that the first box body 211 and the second box body 212 jointly define the assembly space for accommodating the battery cell 22. The first box body 211 and the second box body 212 may each be a hollow structure with an opening at one side. An opening side of the first box body 211 is engaged with an opening side of the second box body 212, so that the first box body 211 and the second box body 212 jointly define the assembly space. Exemplarily, the locking mechanism 10 may be mounted on the first box body 211 or the second box body 212.

In other embodiments, the box 21 may alternatively be another structure. For example, the second box body 212 may be a hollow structure with an opening at one end. The first box body 211 may be a plate-shaped structure. The first box body 211 covers the opening side of the second box body 212, so that the first box body 211 and the second box body 212 jointly define the assembly space. Certainly, the box 21 formed by the first box body 211 and the second box body 212 may be in various shapes, such as a cylindrical shape and a cuboid shape. Exemplarily, in FIG. 3, the shape of the box 21 is a cuboid.

In the battery 20, one or more battery cells 22 may be disposed in the box 21. When a plurality of battery cells 22 are disposed in the box 21, the plurality of battery cells 22 may be connected in series, parallel, or series-parallel. Being connected in series-parallel means a combination of series and parallel connections of the plurality of battery cells 22. The plurality of battery cells 22 may be directly connected in series, parallel, or series-parallel, and then an entirety formed by the plurality of battery cells 22 is accommodated in the box 21; or certainly, the battery 20 may be formed by a plurality of battery cells 22 being connected in series, parallel, or series-parallel first to form a battery module and then a plurality of battery modules being connected in series, parallel, or series-parallel to form an entirety which is accommodated in the battery box 21. In some embodiments, the battery 20 may further include another structure. For example, the battery 20 may further include a busbar component. The busbar component is configured to connect the plurality of battery cells 22 to implement electrical connection between the multiple battery cells 22.

Each battery cell 22 may be a secondary battery or a primary battery or may be a lithium-sulfur battery, a sodium-ion battery, or a magnesium-ion battery, but is not limited thereto. The battery cell 22 may be in a cylindrical shape, a flat shape, a cuboid shape, or another shape. Exemplarily, in FIG. 3, the battery cell 22 is a cuboid structure.

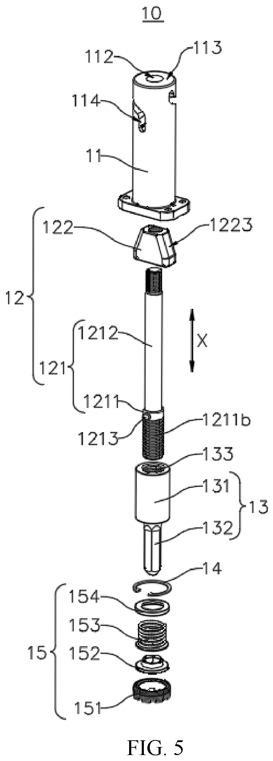

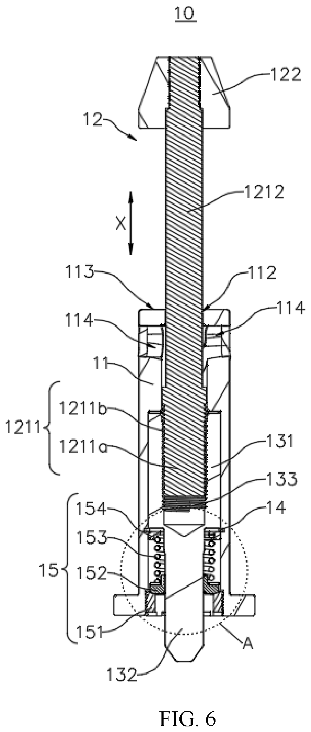

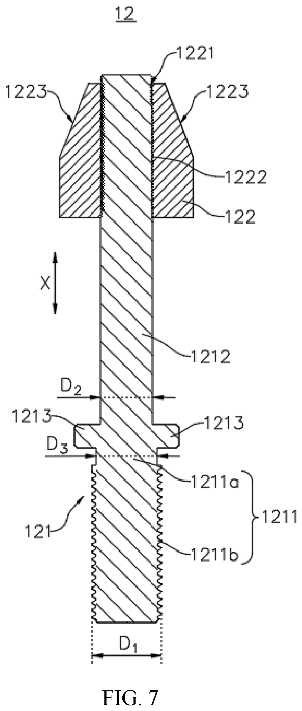

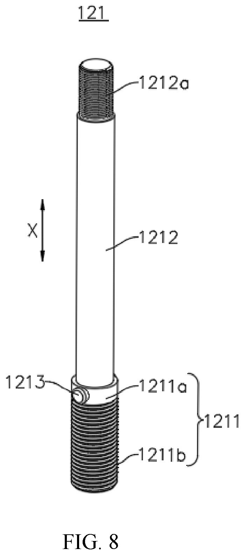

According to some embodiments of this application, referring to FIG. 2 and further referring to FIG. 4, FIG. 5, FIG. 6, FIG. 7, and FIG. 8, FIG. 4 is schematic structural diagram of a locking mechanism 10 according to some embodiments of this application. FIG. 5 is an exploded view of a structure of a locking mechanism 10 according to some embodiments of this application. FIG. 6 is a cross-sectional view of a locking mechanism 10 according to some embodiments of this application. FIG. 7 is a cross-sectional view of a locking member 12 of a locking mechanism 10 according to some embodiments of this application. FIG. 8 is a schematic structural diagram of a connecting portion 121 of a locking member 12 of a locking mechanism 10 according to some embodiments of this application. This application provides a locking mechanism 10 configured to be engaged with or disengaged from a lock base 300 along a first direction X. The locking mechanism 10 includes a sleeve 11, a locking member 12, and an adjustment member 13. The locking member 12 is movably disposed in the sleeve 11. The locking member 12 has a locked state and an unlocked state. The locking member 12 is configured to be snap-fitted with the lock base 300 when in the locked state, so that the locking mechanism 10 is engaged with the lock base 300 along the first direction X. The locking member 12 is configured to be disengaged from the lock base 300 when in the unlocked state, so as to allow the locking mechanism 10 to be disengaged from the lock base 300 along the first direction X. The adjustment member 13 is rotatably connected inside the sleeve 11 around an axis extending along the first direction X. The adjustment member 13 is configured to, when rotating relative to the sleeve 11, drive the locking member 12 to move relative to the sleeve 11, so that the locking member 12 is switched between the locked state and the unlocked state. The locking member 12 includes a connecting portion 121 and a snap-fit portion 122 connected to each other. The connecting portion 121 has a first connecting section 1211 and a second connecting section 1212 arranged along the first direction X. The first connecting section 1211 is threadedly connected to the adjustment member 13. The snap-fit portion 122 is connected to an end of the second connecting section 1212 away from the first connecting section 1211. The snap-fit portion 122 is configured to be snap-fitted with the lock base 300. A diameter of the first connecting section 1211 is greater than a diameter of the second connecting section 1212.

The locking member 12 is configured to be snap-fitted with or disengaged from the lock base 300, so that the locking mechanism 10 can be engaged with or disengaged from the lock base 300 along the first direction X through the locking member 12, so as to implement locking or unlocking between the locking mechanism 10 and the lock base 300.

The locking member 12 can move relative to the sleeve 11, so that the locking member 12 has the locked state where the locking member 12 can be engaged with the lock base 300 and the unlocked state where the locking member 12 is disengaged from the lock base 300. Exemplarily, the locking member 12 includes the connecting portion 121 and the snap-fit portion 122 connected to each other. The connecting portion 121 is a cylindrical structure extending along the first direction X and is inserted into the sleeve 11 along the first direction X, and the first connecting section 1211 of the connecting portion 121 is threadedly connected to the adjustment member 13. The snap-fit portion 122 is connected to the end of the second connecting section 1212 away from the first connecting section 1211, and the snap-fit portion 122 is configured to be snap-fitted with the lock base 300. An extending direction of the snap-fit portion 122 is perpendicular to the first direction X, so that the locking member 12 is an irregular structure capable of rotating around the axis extending along the first direction X, thereby driving the snap-fit portion 122 to rotate by rotating the connecting portion 121, and allowing the snap-fit portion 122 to be snap-fitted with or disengaged from the lock base 300. Certainly, in other embodiments, the snap-fit portion 122 of the locking member 12 may alternatively be a structure extendable and retractable in a direction perpendicular to the first direction X, so that the locking member 12 can be snap-fitted with or disengaged from the lock base 300 through the snap-fit portion 122.

The connecting portion 121 has a first connecting section 1211 and a second connecting section 1212 arranged along the first direction X, that is, the connecting portion 121 includes two sections connected to each other along the first direction X, namely the first connecting section 1211 and the second connecting section 1212. A section of the connecting portion 121 configured to be connected to the adjustment member 13 is the first connecting section 1211. A section of the connecting portion 121 configured to be connected to the snap-fit portion 122 is the second connecting section 1212.

The first connecting section 1211 is threadedly connected to the adjustment member 13, that is, the first connecting section 1211 is threadedly connected to the adjustment member 13. This may mean that the first connecting section 1211 is inserted into the adjustment member 13, that is, the first connecting section 1211 has an external thread, the adjustment member 13 has an internal thread, and the locking member 12 is threadedly connected inside the adjustment member 13. Alternatively, this may mean that the adjustment member 13 is inserted into the first connecting section 1211, that is, the first connecting section 1211 has an internal thread, the adjustment member 13 has an external thread, and the adjustment member 13 is threadedly connected inside the first connecting section 1211. Exemplarily, in FIG. 6 and FIG. 7, the first connecting section 1211 of the connecting portion 121 is inserted into the adjustment member 13, so that the adjustment member 13 is threadedly connected to an outer side of the first connecting section 1211.

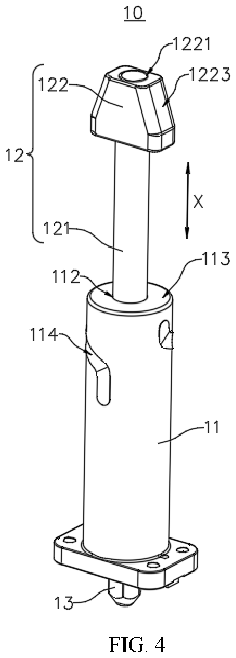

The adjustment member 13 is configured to, when rotating relative to the sleeve 11, drive the locking member 12 to move relative to the sleeve 11, so that the locking member 12 is switched between the locked state and the unlocked state. That is, when the adjustment member 13 is rotated relative to the sleeve 11, the adjustment member 13 can drive the locking member 12 to move relative to the sleeve 11, so as to allow the locking member 12 to be switched between the locked state and the unlocked state. Exemplarily, in FIG. 4 and FIG. 6, when the adjustment member 13 is rotated, the connecting portion 121 of the locking member 12 can be driven to rotate relative to the sleeve 11, so that the connecting portion 121 drives the snap-fit portion 122 to rotate, thereby achieving rotation of the snap-fit portion 122 whose extending direction is perpendicular to the first direction X in a plane perpendicular to the first direction X, allowing the snap-fit portion 122 to be snap-fitted with or disengaged from the lock base 300, and allowing the locking member 12 to be switched between the locked state and the unlocked state.

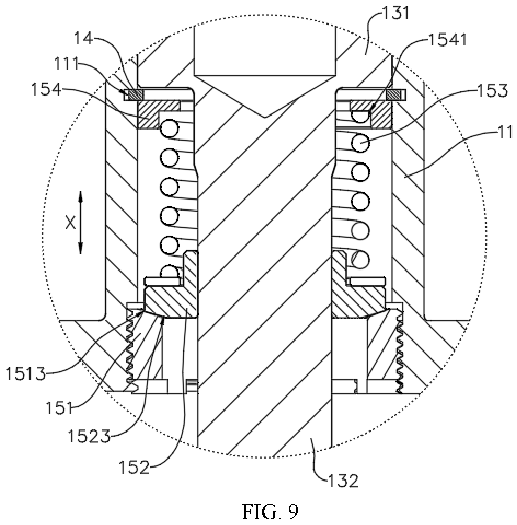

Optionally, the adjustment member 13 can rotate around the axis extending along the first direction X and is axially locked in the sleeve 11 along the first direction X. Referring to FIG. 5 and FIG. 6 and further referring to FIG. 9, FIG. 9 is partially enlarged view of part A of the locking mechanism 10 shown in FIG. 6. The adjustment member 13 includes an assembly section 131 and a guide section 132 arranged and connected along the first direction X. The assembly section 131 is threadedly connected to the first connecting section 1211 of the connecting portion 121. The guide section 132 protrudes from an end of the assembly section 131 facing away from the snap-fit portion 122 along the first direction X. The locking mechanism 10 further includes a limiting member 14. The limiting member 14 is connected to an inner circumferential surface of the sleeve 11; and along the first direction X, the limiting member 14 abuts against an end surface of the assembly section 131 of the adjustment member 13 where the guide section 132 protrudes, so as to limit movement of the adjustment member 13 along the first direction X.

Exemplarily, the limiting member 14 is a snap ring that is snap-fitted with the inner circumferential surface of the sleeve 11. The snap ring surrounds an outer side of the guide section 132. An assembly groove 111 is provided on the inner circumferential surface of the sleeve 11. The assembly groove 111 is an annular groove surrounding the guide section 132 of the adjustment member 13. The limiting member 14 is snap-fitted in the assembly groove 111.

In FIG. 4, FIG. 5, and FIG. 6, the first connecting section 1211 of the connecting portion 121 extends out of the sleeve 11 along the first direction X, so that the snap-fit portion 122 is located on an outer side of the sleeve 11 along the first direction X. The sleeve 11 is provided with an assembly hole 112 from which the second connecting section 1212 of the connecting portion 121 protrudes. The snap-fit portion 122 is connected to an end of the second connecting section 1212 protruding from the assembly hole 112.

The diameter of the first connecting section 1211 is greater than the diameter of the second connecting section 1212, that is, an outer diameter of the first connecting section 1211 is greater than an outer diameter of the second connecting section 1212. It should be noted that in the embodiment where the first connecting section 1211 is provided with the external thread, a diameter of a portion of the first connecting section 1211 with a maximum outer diameter is greater than the diameter of the second connecting section 1212. Referring to FIG. 6 and FIG. 7, the diameter of the first connecting section 1211 is D₁, and the diameter of the second connecting section 1212 is D₂, that is, the diameter D₁ of the first connecting section 1211 is greater than the diameter D₂ of the second connecting section 1212. It should be noted that the diameter D₁ of the first connecting section 1211 is a maximum outer diameter of the first connecting section 1211.

Exemplarily, the diameter D₁ of the first connecting section 1211 may be greater than the diameter D₂ of the second connecting section 1212 by 1 mm, 1.2 mm, 1.5 mm, 1.8 mm, 2 mm, 2.2 mm, 2.5 mm, 2.8 mm, 3 mm, 3.5 mm, 4 mm, or the like.

In these embodiments, the locking mechanism 10 is provided with the locking member 12 and the adjustment member 13, where the locking member 12 includes the connecting portion 121 and the snap-fit portion 122. The first connecting section 1211 of the connecting portion 121 is threadedly connected to the adjustment member 13, so that when the adjustment member 13 is rotated, the connecting portion 121 can be driven to move relative to the sleeve 11, so as to further drive the snap-fit portion 122 to rotate around the axis extending along the first direction X, so that the locking member 12 is switched between the locked state and the unlocked state, and the snap-fit portion 122 can be engaged with or disengaged from the lock base 300, thereby allowing the locking mechanism 10 to be engaged with or disengaged from the lock base 300 along the first direction X. The diameter of the first connecting section 1211 of the connecting portion 121 configured to be threadedly connected to the adjustment member 13 is set to be greater than the diameter of the second connecting section 1212, so that the structural strength of the first connecting section 1211 of the connecting portion 121 can be improved, and a thread depth on the first connecting section 1211 can be further increased. This can improve the structural strength of a region of the connecting portion 121 provided with threads, enhancing the load-bearing capacity, thereby reducing the risk of fracture of the connecting portion 121 during use. In addition, this can improve the structural stability of the threaded connection between the first connecting section 1211 and the adjustment member 13, helping to alleviate the phenomenon of thread slippage or thread structure damage between the connecting portion 121 of the locking member 12 and the adjustment member 13, and reducing the risk of threaded connection failure between the locking member 12 and the adjustment member 13, thereby helping to improve the service life and operational reliability of the locking mechanism 10.

According to some embodiments of this application, referring to FIG. 6, FIG. 7, and FIG. 8, the first connecting section 1211 includes a body portion 1211a and a first external thread 1211b. The body portion 1211a is connected to one end of the second connecting section 1212. The first external thread 1211b protrudes from an outer circumferential surface of the body portion 1211a. An outer diameter of the first external thread 1211b is the diameter of the first connecting section 1211. A first internal thread 133 is provided on an inner circumferential surface of the adjustment member 13. The first internal thread 133 is configured to fit the first external thread 1211b.

The first connecting section 1211 is formed by the body portion 1211a connected to the second connecting section 1212 and the first external thread 1211b surrounding and protruding from the outer circumferential surface of the body portion 1211a. The body portion 1211a and the second connecting section 1212 are each a cylindrical structure extending along the first direction X; and one end of the body portion 1211a is connected to one end of the second connecting section 1212.

Exemplarily, in FIG. 7 and FIG. 8, the body portion 1211a and the first external thread 1211b are integrally formed. Similarly, the body portion 1211a and the second connecting section 1212 are also integrally formed. For example, the body portion 1211a and the second connecting section 1212 may be made by integral forming processes such as casting or turning. Certainly, in other embodiments, the body portion 1211a and the second connecting section 1212 may alternatively be separately disposed. The body portion 1211a may be connected to the second connecting section 1212 through structures such as welding or threaded connection.

The first internal thread 133 is provided on the inner circumferential surface of the adjustment member 13. That is, the adjustment member 13 is provided with a hole for insertion of the first connecting section 1211 of the connecting portion 121 at an end close to the snap-fit portion 122 along the first direction X, and the first internal thread 133 is formed on a wall surface of the hole, so that the first external thread 1211b of the first connecting section 1211 can fit the first internal thread 133 of the adjustment member 13, and the first connecting section 1211 is threadedly connected inside the adjustment member 13. In FIG. 5 and FIG. 6, the hole is provided on an end surface of the assembly section 131 of the adjustment member 13 away from the guide section 132 along the first direction X, and the first internal thread 133 is provided on the assembly section 131 of the adjustment member 13, so that the first connecting section 1211 is threadedly connected inside the assembly section 131 of the adjustment member 13.

In these embodiments, the first connecting section 1211 is provided with the body portion 1211a and the first external thread 1211b, and the first external thread 1211b is a structure protruding from the outer circumferential surface of the body portion 1211a. Correspondingly, the first internal thread 133 fitting the first external thread 1211b is provided on the inner circumferential surface of the adjustment member 13, so that the first connecting section 1211 is inserted into an inner side of the adjustment member 13; and the adjustment member 13 is a structure threadedly connected to an outer side of the first connecting section 1211. This helps to set the body portion 1211a of the first connecting section 1211 as a solid structure, further improving the structural strength of the first connecting section 1211 of the connecting portion 121, thereby reducing the risk of fracture of the connecting portion 121 during use.

In some embodiments, referring to FIG. 7 and FIG. 8, a diameter of the body portion 1211a is greater than or equal to a diameter of the second connecting section 1212.

In FIG. 7 and FIG. 8, the diameter of the second connecting section 1212 is D₂, and the diameter of the body portion 1211a is D₃, that is, the diameter D₃ of the body portion 1211a is greater than or equal to the diameter D₂ of the second connecting section 1212. In other words, along a radial direction of the first connecting section 1211, the body portion 1211a of the first connecting section 1211 protrudes from or is flush with an outer circumferential surface of the second connecting section 1212.

In these embodiments, the diameter of the body portion 1211a of the first connecting section 1211 is set to be greater than or equal to the diameter of the second connecting section 1212, so that a diameter of a region of the first connecting section 1211 not provided with the first external thread 1211b is also greater than or equal to the diameter of the second connecting section 1212, helping to improve the overall structural strength of the first connecting section 1211, thereby reducing the risk of fracture of the first connecting section 1211 of the connecting portion 121 during use.

According to some embodiments of this application, referring to FIG. 5, FIG. 6, and FIG. 7, the snap-fit portion 122 is detachably connected to the second connecting section 1212.

There are various structures in which the snap-fit portion 122 is detachably connected to one end of the second connecting section 1212. For example, the snap-fit portion 122 may be detachably connected to the second connecting section 1212 through structures such as snap-fitting or threaded connection.

In these embodiments, the snap-fit portion 122 of the locking member 12 is configured to be detachably connected to the second connecting section 1212 of the connecting portion 121, so that the locking member 12 can be assembled by inserting an end of the connecting portion 121 provided with the snap-fit portion 122 into the sleeve 11, and then the snap-fit portion 122 is assembled to the second connecting section 1212 of the connecting portion 121. That is, the second connecting section 1212 of the connecting portion 121 is first inserted into the sleeve 11, and then the snap-fit portion 122 is connected to the second connecting section 1212. Through the locking mechanism 10 with such structure, the assembly difficulty between the locking member 12 and the sleeve 11 can be reduced, and it is only necessary to set a diameter of an assembly hole 112 at an end of the sleeve 11 close to the snap-fit portion 122 in the first direction X to match the diameter of the second connecting section 1212 of the connecting portion 121, without needing to enlarge the diameter of the assembly hole 112 at the end of the sleeve 11 close to the snap-fit portion 122 in the first direction X to allow the first connecting section 1211 with a large diameter of the connecting portion 121 to pass through. This helps to reduce an assembly gap between the second connecting section 1212 of the connecting portion 121 and the sleeve 11, alleviating the phenomenon of shaking of the locking mechanism 10 during use, and reducing the risk of impurities entering the sleeve 11 through the gap between the second connecting section 1212 and the sleeve 11, thereby effectively improving the service life and operational reliability of the locking mechanism 10.

In some embodiments, referring to FIG. 5 and FIG. 7, the snap-fit portion 122 is sleeved on an outer side of the second connecting section 1212, and the snap-fit portion 122 is threadedly connected to the second connecting section 1212.

In FIG. 7 and FIG. 8, the snap-fit portion 122 is provided with a first through hole 1221 for the second connecting section 1212 to pass through. A second internal thread 1222 is provided on a wall surface of the first through hole 1221. Correspondingly, the second connecting section 1212 is inserted into the first through hole 1221 of the snap-fit portion 122. In addition, a second external thread 1212a is formed on an outer circumferential surface of a portion of the second connecting portion 121 inserted into the first through hole 1221, so that the snap-fit portion 122 can be threadedly connected to the outer side of the second connecting section 1212.

In these embodiments, the snap-fit portion 122 is sleeved on the outer side of the second connecting section 1212, and the snap-fit portion 122 and the second connecting section 1212 of the connecting portion 121 are connected through a threaded connection structure, helping to reduce the assembly difficulty between the snap-fit portion 122 and the connecting portion 121, and improving the structural stability and reliability of the snap-fit portion 122 connected to the connecting portion 121.

According to some embodiments of this application, referring to FIG. 4, FIG. 5, FIG. 6, and FIG. 7, the snap-fit portion 122 is located outside the sleeve 11, the snap-fit portion 122 protrudes from an outer circumferential surface of the connecting portion 121 along its extending direction, and the extending direction of the snap-fit portion 122 is perpendicular to the first direction X. The adjustment member 13 can drive the connecting portion 121 to rotate by rotating relative to the sleeve 11, so that the snap-fit portion 122 is snap-fitted with or disengaged from the lock base 300, and the locking member 12 is switched between the locked state and the unlocked state.

The snap-fit portion 122 is located outside the sleeve 11. That is, the connecting portion 121 has a portion not inserted into the sleeve 11, and the snap-fit portion 122 is connected to an end of a portion of the second connecting section 1212 of the connecting portion 121 not inserted into the sleeve 11, so that the snap-fit portion 122 and the sleeve 11 are spaced apart along the first direction X.

The snap-fit portion 122 protrudes from the outer circumferential surface of the connecting portion 121 along its extending direction, and the extending direction of the snap-fit portion 122 is perpendicular to the first direction X. That is, in the extending direction of the snap-fit portion 122, the snap-fit portion 122 extends out of the outer circumferential surface of the connecting portion 121. Exemplarily, in FIG. 4 and FIG. 6, the extending direction of the snap-fit portion 122 is perpendicular to the first direction X, so that the snap-fit portion 122 and the connecting portion 121 form a T-shaped structure. Certainly, in other embodiments, the snap-fit portion 122 and the connecting portion 121 may alternatively form an L-shaped structure.

The adjustment member 13 can drive the connecting portion 121 to rotate by rotating relative to the sleeve 11, so that the snap-fit portion 122 is snap-fitted with the lock base 300, and the locking member 12 is switched between the locked state and the unlocked state. That is, when the adjustment member 13 rotates relative to the sleeve 11, the connecting portion 121 can drive the snap-fit portion 122 to rotate around the axis extending along the first direction X, thereby allowing the extending direction of the snap-fit portion 122 to change in a plane perpendicular to the first direction X, allowing the snap-fit portion 122 to be overlapped with the lock base 300 or disengaged from the lock base 300, and allowing the snap-fit portion 122 to be snap-fitted with or disengaged from the lock base 300.

Exemplarily, a projection of the snap-fit portion 122 in the first direction X is rectangular. A length direction of the rectangle is the extending direction of the snap-fit portion 122. The snap-fit portion 122 extends out of the outer circumferential surface of the connecting portion 121 in the length direction of the rectangle.

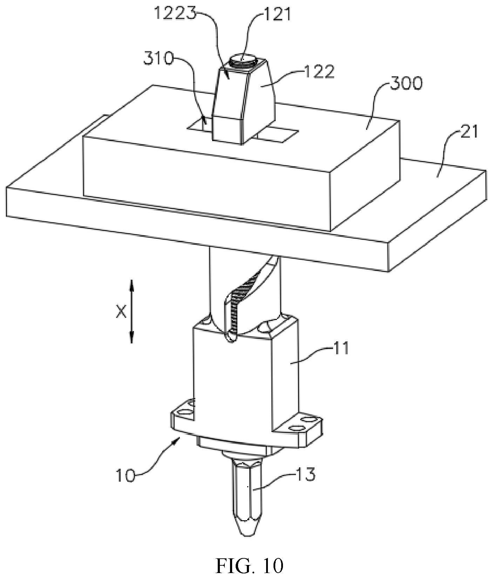

In some embodiments, referring to FIG. 4 and further referring to FIG. 10, FIG. 10 is a schematic diagram of connection between a locking mechanism 10 and a lock base 300 according to some embodiments of this application. The lock base 300 is provided with a lock hole 310 for insertion of the locking member 12. The lock hole 310 runs through two sides of the lock base 300 along the first direction X. After the locking member 12 is inserted into the lock hole 310, the adjustment member 13 can be rotated to drive the snap-fit portion 122 of the locking member 12 to rotate around the axis extending along the first direction X, so that the snap-fit portion 122 can be engaged with a side surface of the lock base 300 facing away from the sleeve 11, and the locking mechanism 10 is engaged with the lock base 300 in the first direction X, thereby achieving mutual locking between the locking mechanism 10 and the lock base 300. Conversely, when the adjustment member 13 is rotated to drive the snap-fit portion 122 of the locking member 12 to rotate until the projection of the snap-fit portion 122 in the first direction X is located in the lock hole 310, the locking member 12 can exit from the lock hole 310, so that the locking mechanism 10 can be disengaged from the lock base 300 in the first direction X, thereby achieving mutual unlocking between the locking mechanism 10 and the lock base 300.

A cross-section of the lock hole 310 is rectangular. When the extending direction of the snap-fit portion 122 is consistent with a length direction of the cross-section of the lock hole 310, the snap-fit portion 122 can be inserted into the lock hole 310 or exit from the lock hole 310. When the snap-fit portion 122 passes through the lock hole 310 and the extending direction of the snap-fit portion 122 intersects the length direction of the cross-section of the lock hole 310, the snap-fit portion 122 can be engaged with the side surface of the lock base 300 facing away from the sleeve 11.

Optionally, referring to FIG. 4 and FIG. 6, along the first direction X, an end of the sleeve 11 close to the snap-fit portion 122 is further provided with a snap-fit surface 113. The snap-fit surface 113 is configured to abut against a side of the lock base 300 facing the sleeve 11 when the locking member 12 is in the locked state. The assembly hole 112 runs through the snap-fit surface 113 along the first direction X. When the locking mechanism 10 is engaged with the lock base 300 along the first direction X, the snap-fit portion 122 and the snap-fit surface 113 abut against two sides of the lock base 300 along the first direction X respectively. The snap-fit surface 113 of the sleeve 11 is set to be able to abut against the side of the lock base 300 facing the sleeve 11 when the locking member 12 and the lock base 300 are engaged in the locked state, so that the locking mechanism 10 can clamp the lock base 300 in the first direction X through the snap-fit portion 122 of the locking member 12 and the snap-fit surface 113 of the sleeve 11, helping to reduce the phenomenon of shaking of the locking mechanism 10 during use, thereby improving the stability of mutual locking between the locking mechanism 10 and the lock base 300.

In these embodiments, the snap-fit portion 122 is disposed on the outer side of the sleeve 11, and the snap-fit portion 122 protrudes from the outer circumferential surface of the connecting portion 121 along its extending direction, so that the adjustment member 13 can drive the connecting portion 121 to rotate when rotating, and the snap-fit portion 122 can rotate with the connecting portion 121. This allows the snap-fit portion 122 to be snap-fitted with or disengaged from the lock base 300 after the extending direction of the snap-fit portion 122 changes in the plane perpendicular to the first direction X, thereby allowing the locking mechanism 10 to be engaged with or disengaged from the lock base 300 in the first direction X. Such a structure is simple and convenient to use.

According to some embodiments of this application, referring to FIG. 5, FIG. 6, FIG. 7, and FIG. 8, the sleeve 11 is provided with a first limiting portion 114. The connecting portion 121 is provided with a second limiting portion 1213. The first limiting portion 114 and the second limiting portion 1213 fit to limit a rotation angle of the connecting portion 121.

The first limiting portion 114 and the second limiting portion 1213 play a role in fitting to limit the rotation angle of the connecting portion 121 relative to the sleeve 11. There may be various structures of the first limiting portion 114 and the second limiting portion 1213. For example, the first limiting portion 114 may be a limiting groove provided on the inner circumferential surface of the sleeve 11. Correspondingly, the second limiting portion 1213 may be a protrusion protruding from the outer circumferential surface of the connecting portion 121. The protrusion is inserted into the limiting groove to cooperatively limit the rotation angle of the connecting portion 121. Certainly, the first limiting portion 114 and the second limiting portion 1213 may alternatively be protrusions. The first limiting portion 114 protrudes from one end of the sleeve 11 in the first direction X. The second limiting portion 1213 protrudes from the outer circumferential surface of the connecting portion 121. The second limiting portion 1213 can abut against the first limiting portion 114 when the connecting portion 121 rotates relative to the sleeve 11, so that the first limiting portion 114 and the second limiting portion 1213 fit each other to limit the rotation angle of the connecting portion 121.

Optionally, one or more first limiting portions 114 and second limiting portions 1213 may be provided. Exemplarily, in the embodiments of this application, referring to FIG. 6 and FIG. 8, there are two first limiting portions 114. Correspondingly, there are also two second limiting portions 1213, and the two second limiting portions 1213 are respectively disposed on two sides of the connecting portion 121 along a radial direction of the connecting portion 121.

Exemplarily, the first limiting portion 114 and the second limiting portion 1213 fit to limit the angle of rotation of the connecting portion 121 relative to the sleeve 11 to 90 degrees, so that the snap-fit portion 122 can rotate from an angle where the extending direction of the snap-fit portion 122 is parallel to the length direction of the lock hole 310 to an angle where the extending direction of the snap-fit portion 122 is perpendicular to the length direction of the lock hole 310, thereby achieving switching of the locking member 12 between the unlocked state and the locked state.

In the embodiments, the sleeve 11 and the connecting portion 121 are correspondingly provided with the first limiting portion 114 and the second limiting portion 1213 respectively, so that the first limiting portion 114 and the second limiting portion 1213 can fit to limit the rotation angle of the connecting portion 121, and under the cooperative limitation of the first limiting portion 114 and the second limiting portion 1213, the connecting portion 121 can drive the snap-fit portion 122 to be snap-fitted with or disengaged from the lock base 300, thereby facilitating switching of the locking member 12 between the locked state and the unlocked state, and making the structure simple and convenient to operate. In addition, this can alleviate the phenomenon that the snap-fit portion 122 cannot be snap-fitted with the lock base 300 due to an excessive rotation angle of the snap-fit portion 122 following the connecting portion 121, helping to improve the reliability of mutual locking between the locking mechanism 10 and the lock base 300.

According to some embodiments of this application, referring to FIG. 6 and FIG. 10, the first limiting portion 114 and the second limiting portion 1213 are further configured to fit to guide the connecting portion 121 to move along the first direction X when the adjustment member 13 rotates relative to the sleeve 11, so that the locking member 12 moves between a first position and a second position along the first direction X. When the locking member 12 is located at the first position, the locking member 12 is in the locked state, so that the snap-fit portion 122 can be snap-fitted with the lock base 300. When the locking member 12 is located at the second position, the locking member 12 is in the unlocked state, so that the snap-fit portion 122 can be disengaged from the lock base 300.

The first limiting portion 114 and the second limiting portion 1213 are further configured to fit to guide the connecting portion 121 to move along the first direction X when the adjustment member 13 rotates relative to the sleeve 11. That is, in the process of the adjustment member 13 driving the connecting portion 121 to rotate relative to the sleeve 11, the first limiting portion 114 and the second limiting portion 1213 fit to limit the rotation angle of the connecting portion 121 and can also guide the connecting portion 121 to move relative to the sleeve 11 in the first direction X, so that the locking member 12 has two endpoint positions relative to the sleeve 11 in the first direction X, namely the first position and the second position. In other words, when the adjustment member 13 drives the connecting portion 121 to rotate relative to the sleeve 11, the connecting portion 121 can also move relative to the sleeve 11 along the first direction X, so that when the connecting portion 121 drives the snap-fit portion 122 to rotate until the snap-fit portion 122 can be engaged with the side of the lock base 300 facing away from the sleeve 11, the locking member 12 is located at the first position. When the locking member 12 is located at the first position, the snap-fit portion 122 and the snap-fit surface 113 of the sleeve 11 abut against two sides of the lock base 300 in the first direction X respectively. Correspondingly, when the locking member 12 moves to the second position, the projection of the snap-fit portion 122 in the first direction X is located in the lock hole 310 of the lock base 300, and the snap-fit portion 122 and the lock base 300 are spaced apart in the first direction X, so that the locking member 12 can be disengaged from the lock base 300 along the first direction X.

When the adjustment member 13 rotates relative to the sleeve 11, the adjustment member 13 can drive the connecting portion 121 to rotate and also drive the connecting portion 121 to move along the first direction X. In FIG. 6 and FIG. 9, a threaded connection structure is provided between the adjustment member 13 and the first connecting section 121 of the connecting portion 121, so that the adjustment member 13 can drive the connecting portion 121 to rotate. In addition, when the circumferential rotation of the connecting portion 121 is restricted, the adjustment member 13 can provide a feed force to the connecting portion 121 along the first direction X, thereby allowing the connecting portion 121 to move along the first direction X.

In these embodiments, the first limiting portion 114 and the second limiting portion 1213 can limit the rotation angle of the connecting portion 121and also fit to guide the connecting portion 121 to move relative to the sleeve 11 in the first direction X, so that the adjustment member 13 can drive the connecting portion 121 to rotate relative to the sleeve 11 and also drive the locking member 12 to move between the first position and the second position along the first direction X, thereby allowing the adjustment member 13 to drive the snap-fit portion 122 to be snap-fitted with the lock base 300 and also drive the snap-fit portion 122 to abut against the lock base 300, reducing a gap size between the snap-fit portion 122 and the lock base 300, and reducing the phenomenon of vibration between the locking mechanism 10 and the lock base 300.

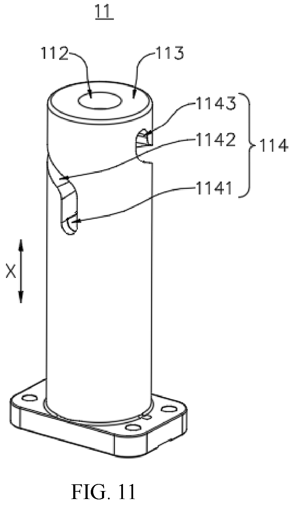

According to some embodiments of this application, referring to FIG. 5, FIG. 6, FIG. 7, and FIG. 8 and further referring to FIG. 11, FIG. 11 is a schematic structural diagram of a sleeve 11 of a locking mechanism 10 according to some embodiments of this application. The first limiting portion 114 is a limiting groove provided on the inner circumferential surface of the sleeve 11. The second limiting portion 1213 is a protrusion protruding from the outer circumferential surface of the connecting portion 121. The protrusion is at least partially accommodated in the limiting groove.

The first limiting portion 114 is a limiting groove, and the second limiting portion 1213 is a protrusion. The protrusion is inserted into the limiting groove, so that a movement trajectory of the protrusion is restricted and guided by the limiting groove, thereby allowing the first limiting portion 114 and the second limiting portion 1213 to fit to limit the rotation angle of the connecting portion 121 and the movement between the first position and the second position along the first direction X.

Exemplarily, in FIG. 8, the second limiting portion 1213 protrudes from the outer circumferential surface of the body portion 1211a of the first connecting section 1211 of the connecting portion 121. Certainly, in other embodiments, the second limiting portion 1213 may alternatively protrude from the outer circumferential surface of the second connecting section 1212 of the connecting portion 121.

It should be noted that in other embodiments, the first limiting portion 114 and the second limiting portion 1213 may alternatively be other structures. For example, the first limiting portion 114 is a protrusion protruding from the inner circumferential surface of the sleeve 11. Correspondingly, the second limiting portion 1213 is a limiting groove provided on the outer circumferential surface of the connecting portion 121.

In these embodiments, the first limiting portion 114 and the second limiting portion 1213 are respectively the limiting groove provided on the inner circumferential surface of the sleeve 11 and the protrusion provided on the outer circumferential surface of the connecting portion 121. The protrusion is inserted into the limiting groove, the limiting groove limits the rotation angle of the connecting portion 121, and the protrusion can be guided by the limiting groove to allow the connecting portion 121 to move relative to the sleeve 11 along the first direction X while rotating relative to the sleeve 11, making the structure simple and easy to implement and have high stability.

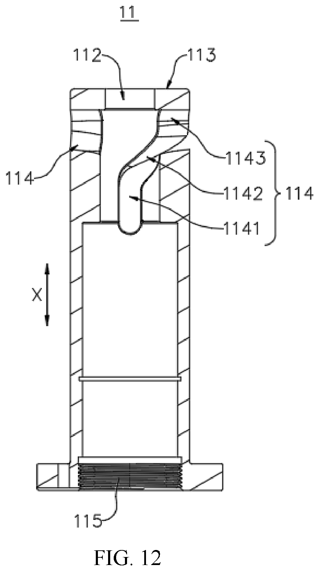

In some embodiments, referring to FIG. 11 and further referring to FIG. 12, FIG. 12 is a cross-sectional view of a sleeve 11 of a locking mechanism 10 according to some embodiments of this application. The limiting groove may include a first groove section 1141, a second groove section 1142, and a third groove section 1143 connected in sequence. The first groove section 1141 and the third groove section 1143 both extend along the first direction X. The first groove section 1141 and the third groove section 1143 are spaced apart along a circumferential direction of the connecting portion 121, and the first groove section 1141 and the third groove section 1143 are spaced apart along the first direction X. Along the first direction X, the third groove section 1143 is closer to the snap-fit portion 122 than the first groove section 1141. When the locking member 12 is located at the first position, the protrusion is located in the first groove section 1141. When the locking member 12 is located at the second position, the protrusion is located in the third groove section 1143.

The first groove section 1141 and the third groove section 1143 are spaced apart along the circumferential direction of the connecting portion 121, and the first groove section 1141 and the third groove section 1143 are spaced apart along the first direction X. That is, the first groove section 1141 and the third groove section 1143 of the limiting groove have a distance therebetween in the first direction X and also have a distance therebetween in the circumferential direction of the connecting portion 121. It should be noted that since the first groove section 1141 and the third groove section 1143 are spaced apart in both the first direction X and the circumferential direction of the connecting portion 121, the second groove section 1142 connected between the first groove section 1141 and the third groove section 1143 is a helical structure surrounding the connecting portion 121. Thus, when the protrusion is located in the first groove section 1141 and the third groove section 1143, the connecting portion 121 can only move along the first direction X under the drive of the adjustment member 13, and when the protrusion is located in the second groove section 1142, the connecting portion 121 can move along the first direction X and rotate around the axis extending along the first direction X under the drive of the adjustment member 13.

When the locking member 12 is located at the first position, the protrusion is located in the first groove section 1141, and when the locking member 12 is located at the second position, the protrusion is located in the third groove section 1143. That is, after the protrusion of the connecting portion 121 moves from the first groove section 1141 to the third groove section 1143, the locking member 12 can move from the first position to the second position.

Certainly, the structure of the limiting groove is not limited thereto. In some embodiments, the limiting groove may alternatively be another structure. For example, the limiting groove extends along the first direction X and has a structure with a large width in the circumferential direction of the connecting portion 121, so that the limiting groove has two opposite groove side walls in the circumferential direction of the connecting portion 121. The two groove side walls are spaced apart in the circumferential direction of the connecting portion 121, and the two groove side walls are both configured to abut against the protrusion. The protrusion is inserted into the limiting groove, and the protrusion can move between the two groove side walls along the circumferential direction of the connecting portion 121, so that the rotation angle of the connecting portion 121 is limited. In addition, when the protrusion abuts against the groove side wall of the limiting groove, the groove side wall of the limiting groove can block the rotation of the connecting portion 121 to limit the rotation angle of the connecting portion 121; and after the protrusion of the connecting portion 121 is blocked by the groove side wall of the limiting groove, the protrusion can move along the first direction X under the guidance of the groove side wall of the limiting groove, thereby allowing the connecting portion 121 to move along the first direction X.

In these embodiments, the first groove section 1141 and the third groove section 1143 of the limiting groove are configured to both extend along the first direction X, and the first groove section 1141 and the third groove section 1143 are spaced apart in both the first direction X and the circumferential direction of the connecting portion 121, so that the second groove section 1142 is a helical groove connected between the first groove section 1141 and the third groove section 1143. Thus, when the protrusion of the connecting portion 121 is located in the first groove section 1141 and the third groove section 1143, the protrusion of the connecting portion 121 can only move along the first direction X following the extending directions of the first groove section 1141 and the second groove section 1142; and when the protrusion of the connecting portion 121 is located in the second groove section 1142, the protrusion of the connecting portion 121 can rotate relative to the sleeve 11 and move relative to the sleeve 11 along the first direction X following the extending direction of the second groove section 1142. This achieves limitation of the rotation angle of the locking member 12 and movement of the locking member 12 between the first position and the second position along the first direction X. In addition, the third groove section 1143 is disposed closer to the snap-fit portion 122 than the first groove section 1141 in the first direction X, so that when the protrusion is located in the first groove section 1141, the snap-fit portion 122 can be snap-fitted with the lock base 300 and is closer to the sleeve 11, thereby allowing the snap-fit portion 122 to abut against the lock base 300 in the first direction X.

In some embodiments, referring to FIG. 11 and FIG. 12, the limiting groove runs through an outer circumferential surface of the sleeve 11 along a radial direction of the sleeve 11. That is, along a depth direction of the limiting groove, the limiting groove runs through the inner circumferential surface and the outer circumferential surface of the sleeve 11, so that a region of the sleeve 11 provided with the limiting groove is a structure penetrating inside and outside.

In these embodiments, the limiting groove is configured to run through the inner circumferential surface of the sleeve 11 to the outer circumferential surface of the sleeve 11. Thus, the limiting groove can be processed from the outer circumferential surface of the sleeve 11, helping to reduce the difficulty of providing the limiting groove on the sleeve 11. In addition, a depth of the limiting groove can be increased, thereby improving the stability of the cooperation between the protrusion on the connecting portion 121 and the limiting groove.

According to some embodiments of this application, referring to FIG. 5, FIG. 6, and FIG. 9, the locking mechanism 10 may further include an anti-loosening assembly 15. The anti-loosening assembly 15 is disposed between the sleeve 11 and the adjustment member 13. The anti-loosening assembly 15 is configured to selectively lock the adjustment member 13 to the sleeve 11, so as to limit rotation of the adjustment member 13 relative to the sleeve 11.

The anti-loosening assembly 15 is configured to selectively lock the adjustment member 13 to the sleeve 11, so as to limit rotation of the adjustment member 13 relative to the sleeve 11. That is, the anti-loosening assembly 15 can selectively implement locking or unlocking between the adjustment member 13 and the sleeve 11. When the anti-loosening assembly 15 locks the adjustment member 13 to the sleeve 11, the adjustment member 13 cannot rotate relative to the sleeve 11. When the anti-loosening assembly 15 unlocks the adjustment member 13 from the sleeve 11, the adjustment member 13 can rotate relative to the sleeve 11.

In these embodiments, the locking mechanism 10 is further provided with the anti-loosening assembly 15. By disposing the anti-loosening assembly 15 between the sleeve 11 and the adjustment member 13, the adjustment member 13 can be selectively locked to the sleeve 11. That is, when the anti-loosening assembly 15 releases the sleeve 11 and the adjustment member 13, the anti-loosening assembly 15 can allow the adjustment member 13 to rotate relative to the sleeve 11, so as to drive the locking member 12 to move relative to the sleeve 11, so that the locking member 12 is snap-fitted with or disengaged from the lock base 300. In addition, when the anti-loosening assembly 15 locks the sleeve 11 and the adjustment member 13, the anti-loosening assembly 15 can limit rotation of the adjustment member 13 relative to the sleeve 11, thereby alleviating the phenomenon of snap-fit failure between the locking member 12 and the lock base 300 due to unintended rotation of the adjustment member 13, improving the locking effect between the locking member 12 and the lock base 300, and helping to improve the stability and reliability of mutual locking between the locking mechanism 10 and the lock base 300.

According to some embodiments of this application, referring to FIG. 5, FIG. 6, and FIG. 9, the anti-loosening assembly 15 may include a first clutch member 151 and a second clutch member 152. The first clutch member 151 is disposed in the sleeve 11. The second clutch member 152 is disposed on the adjustment member 13. The first clutch member 151 and the second clutch member 152 are configured to: limit rotation of the adjustment member 13 relative to the sleeve 11 when snap-fitted with each other; and allow rotation of the adjustment member 13 relative to the sleeve 11 when disengaged from each other.

When first clutch member 151 and the second clutch member 152 are snap-fitted with each other, rotation of the adjustment member 13 relative to the sleeve 11 can be limited. Conversely, when the first clutch member 151 and the second clutch member 152 are disengaged from each other, rotation of the adjustment member 13 relative to the sleeve 11 can be allowed. Optionally, there may be various structures of the first clutch member 151 and the second clutch member 152. For example, the first clutch member 151 may be fixed to the inner side of the sleeve 11, and the second clutch member 152 is movably sleeved on the outer side of the adjustment member 13 along the first direction X and circumferentially locked to the adjustment member 13. That is, the second clutch member 152 can move relative to the adjustment member 13 along the first direction X but cannot rotate circumferentially relative to the adjustment member 13, so that when the second clutch member 152 moves along the first direction X until the second clutch member 152 is engaged with the first clutch member 151, the first clutch member 151 and the second clutch member 152 can fit to limit rotation of the adjustment member 13 relative to the sleeve 11. Conversely, when the first clutch member 151 and the second clutch member 152 are disengaged from each other, rotation of the adjustment member 13 relative to the sleeve 11 can be allowed. Certainly, the first clutch member 151 may alternatively be movably disposed in the sleeve 11 along the first direction X and circumferentially locked to the sleeve 11. Correspondingly, the second clutch member 152 is fixedly sleeved on the outer side of the adjustment member 13. The anti-loosening assembly 15 may alternatively be a structure where the first clutch member 151 is fixed in the sleeve 11, the second clutch member 152 is fixedly sleeved on the outer side of the adjustment member 13, and the adjustment member 13 is movably disposed in the sleeve 11 along the first direction X, so that movement of the adjustment member 13 along the first direction X can drive the second clutch member 152 to be snap-fitted with or disengaged from the first clutch member 151.

Certainly, the structure of the anti-loosening assembly 15 is not limited thereto. In other embodiments, the anti-loosening assembly 15 may alternatively be another structure. For example, the anti-loosening assembly 15 may be a bolt threadedly connected to the sleeve 11. When the bolt is tightened, the bolt can abut against the adjustment member 13 to limit rotation of the adjustment member 13 relative to the sleeve 11. When the bolt is loosened, the bolt can be disengaged from the adjustment member 13 to allow rotation of the adjustment member 13 relative to the sleeve 11, thereby allowing the anti-loosening assembly 15 to selectively lock the adjustment member 13 to the sleeve 11.

In these embodiments, the anti-loosening assembly 15 is provided with the first clutch member 151 and the second clutch member 152 that can be snap-fitted with or disengaged from each other, and the first clutch member 151 and the second clutch member 152 are respectively disposed in the sleeve 11 and the adjustment member 13, so that rotation of the adjustment member 13 relative to the sleeve 11 can be limited when the first clutch member 151 and the second clutch member 152 are snap-fitted with each other, and rotation of the adjustment member 13 relative to the sleeve 11 can be allowed when the first clutch member 151 and the second clutch member 152 are disengaged from each other, thereby achieving the function of the anti-loosening assembly 15 in selectively locking the adjustment member 13 to the sleeve 11.

In some embodiments, still referring to FIG. 5, FIG. 6, and FIG. 9, the first clutch member 151 and the second clutch member 152 are arranged along the first direction X. The first clutch member 151 is fixed to the sleeve 11, the second clutch member 152 is circumferentially locked to the adjustment member 13, and the second clutch member 152 is movably disposed on the adjustment member 13 along the first direction X, so that the second clutch member 152 can be snap-fitted with or disengaged from the first clutch member 151.

The first clutch member 151 is fixed to the inner side of the sleeve 11. There are various fixed connection structures between the first clutch member 151 and the sleeve 11. For example, the first clutch member 151 can be fixedly connected to the sleeve 11 through structures such as threaded connection, welding connection, adhesion, snap-fitting, or interference fit.

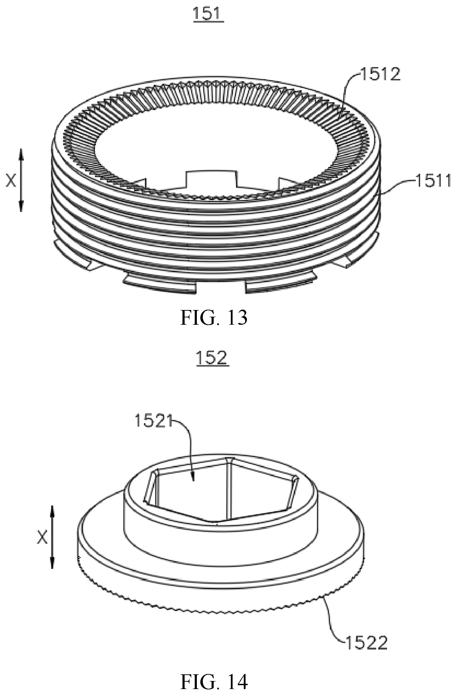

Exemplarily, referring to FIG. 9 and FIG. 12 and further referring to FIG. 13, FIG. 13 is a schematic structural diagram of a first clutch member 151 of an anti-loosening assembly 15 of a locking mechanism 10 according to some embodiments of this application. A third internal thread 115 is formed on the inner circumferential surface of the sleeve 11. A third external thread 1511 is formed on the outer circumferential surface of the first clutch member 151. The first clutch member 151 is inserted into the sleeve 11. In addition, the third external thread 1511 and the third internal thread 115 fit each other, so that the first clutch member 151 is threadedly connected inside the sleeve 11.

The second clutch member 152 is circumferentially locked to the adjustment member 13, and the second clutch member 152 is movably disposed on the adjustment member 13 along the first direction X. That is, the second clutch member 152 can move relative to the adjustment member 13 along the first direction X but cannot rotate circumferentially relative to the adjustment member 13, so that the second clutch member 152 can be snap-fitted with or disengaged from the first clutch member 151 when moving along the first direction X.

Exemplarily, the second clutch member 152 is sleeved on the outer side of the guide section 132 of the adjustment member 13.

In the embodiments, the first clutch member 151 and the second clutch member 152 are arranged along the first direction X, and the second clutch member 152 is movably disposed on the adjustment member 13 along the first direction X. The first clutch member 151 is fixed to the sleeve 11, and the second clutch member 152 is configured as a structure circumferentially locked to the adjustment member 13, so that the second clutch member 152 can be snap-fitted with or disengaged from the first clutch member 151 by moving the second clutch member 152, thereby limiting rotation of the adjustment member 13 relative to the sleeve 11 or allowing rotation of the adjustment member 13 relative to the sleeve 11. The anti-loosening assembly 15 with such structure is simple in structure and convenient to operate and implement.

According to some embodiments of this application, referring to FIG. 5, FIG. 6, and FIG. 9 and further referring to FIG. 14, FIG. 14 is a schematic structural diagram of a second clutch member 152 of an anti-loosening assembly 15 of a locking mechanism 10 according to some embodiments of this application. The adjustment member 13 has a guide section 132. The second clutch member 152 is movably sleeved on an outer side of the guide section 132 along the first direction X. A cross-section of the guide section 132 perpendicular to the first direction X is polygonal, and an outer circumferential surface of the guide section 132 fits an inner circumferential surface of the second clutch member 152, so that the second clutch member 152 is circumferentially locked to the adjustment member 13.

The guide section 132 is connected to an end of the assembly section 131 of the adjustment member 13 away from the snap-fit portion 122 in the first direction X. The first clutch member 151 is fixed in the sleeve 11 and disposed around the guide section 132 of the adjustment member 13. The second clutch member 152 is movably sleeved on the outer side of the guide section 132 of the adjustment member 13 along the first direction X, so that the second clutch member 152 can move relative to the adjustment member 13 along the first direction X, and the second clutch member 152 can be snap-fitted with or disengaged from the first clutch member 151.

The second clutch member 152 is provided with a second through hole 1521 for insertion of the guide section 132 of the adjustment member 13, so that the second clutch member 152 can be sleeved on the outer side of the guide section 132. The cross-section of the guide section 132 perpendicular to the first direction X is polygonal, and the outer circumferential surface of the guide section 132 fits the inner circumferential surface of the second clutch member 152. That is, the shape of the cross-section of the guide section 132 perpendicular to the first direction X is the same as the shape of a cross-section of the second through hole 1521 perpendicular to the first direction X, where the shapes of the cross-sections are both polygonal shapes, so that after the guide section 132 is inserted into the second through hole 1521 of the second clutch member 152, the outer circumferential surface of the guide section 132 can fit a wall surface of the second through hole 1521.

Exemplarily, in FIG. 5 and FIG. 14, the cross-section of the guide section 132 perpendicular to the first direction X and the cross-section of the second through hole 1521 perpendicular to the first direction X are each in a regular hexagon shape. Certainly, in other embodiments, the cross-section of the guide section 132 perpendicular to the first direction X and the cross-section of the second through hole 1521 perpendicular to the first direction X may alternatively be triangular, rectangular, pentagonal, heptagonal, or the like.

It should be noted that in other embodiments, there may also be various structures where the second clutch member 152 is circumferentially locked to the guide section 132 of the adjustment member 13. For example, splines extending along the first direction X may protrude from the outer circumferential surface of the guide section 132. Correspondingly, spline grooves fitting the splines are provided on the wall surface of the second through hole 1521 of the second clutch member 152.

In these embodiments, the guide section 132 of the adjustment member 13 is configured as a structure with a polygonal cross-section perpendicular to the first direction X, the second clutch member 152 is movably sleeved on the outer side of the guide section 132 along the first direction X, and the inner circumferential surface of the second clutch member 152 is configured to fit the outer circumferential surface of the guide section 132, so that a projection shape of the inner circumferential surface of the second clutch member 152 along the first direction X is the same as the shape of the cross-section of the guide section 132 perpendicular to the first direction X, where the projection shape and the shape of the cross-section are both polygonal. Thus, the second clutch member 152 can be circumferentially locked to the adjustment member 13 but can move relative to the adjustment member 13 along the first direction X, making the structure simple and convenient to manufacture.

According to some embodiments of this application, referring to FIG. 5, FIG. 13, and FIG. 14, along the first direction X, an end of the first clutch member 151 facing the second clutch member 152 is provided with a first toothed portion 1512, an end of the second clutch member 152 facing the first clutch member 151 is provided with a second toothed portion 1522, and the second toothed portion 1522 is configured to be meshed with the first toothed portion 1512, so that the second clutch member 152 is snap-fitted with the first clutch member 151.

The first toothed portion 1512 is a toothed structure provided on the end of the first clutch member 151 facing the second clutch member 152 along the first direction X, a plurality of teeth of the first toothed portion 1512 are arranged along a circumferential direction of the first clutch member 151, and each tooth extends along a radial direction of the first clutch member 151, so that the first toothed portion 1512 is a structure disposed around the guide section 132 of the adjustment member 13. The second toothed portion 1522 is a toothed structure provided on the end of the second clutch member 152 facing the first clutch member 151 in the first direction X, a plurality of teeth of the second toothed portion 1522 are arranged along a circumferential direction of the second clutch member 152, and each tooth extends along a radial direction of the second clutch member 152, so that the second toothed portion 1522 is a structure disposed around the guide section 132 of the adjustment member 13. When the second clutch member 152 moves along the first direction X and approaches the first clutch member 151, the second toothed portion 1522 and the first toothed portion 1512 can be meshed with each other, so that the second clutch member 152 and the first clutch member 151 are snap-fitted with each other to limit rotation of the adjustment member 13 relative to the sleeve 11. Conversely, after the first toothed portion 1512 and the second toothed portion 1522 are disengaged from each other, rotation of the adjustment member 13 relative to the sleeve 11 can be allowed.

It should be noted that in other embodiments, the first clutch member 151 and the second clutch member 152 may alternatively be other structures. For example, a limiting hole is provided at an end of the first clutch member 151 facing the second clutch member 152 along the first direction X, and a pin is provided at an end of the second clutch member 152 facing the first clutch member 151 along the first direction X. When the second clutch member 152 moves along the first direction X and approaches the first clutch member 151, the pin can be inserted into the limiting hole, so that the second clutch member 152 and the first clutch member 151 are snap-fitted with each other to limit rotation of the adjustment member 13 relative to the sleeve 11.

In these embodiments, the end of the first clutch member 151 facing the second clutch member 152 is provided with the first toothed portion 1512. Correspondingly, the end of the second clutch member 152 facing the first clutch member 151 is provided with the second toothed portion 1522, so that when the second clutch member 152 moves along the first direction X, the second toothed portion 1522 can be meshed with or disengaged from the first toothed portion 1512. Thus, the second clutch member 152 is snap-fitted with or disengaged from the first clutch member 151, so that when the first toothed portion 1512 and the second toothed portion 1522 are meshed with each other, the first clutch member 151 and the second clutch member 152 can fit to limit rotation of the adjustment member 13 relative to the sleeve 11, making the structure simple and convenient to implement. In addition, through the structure where the first clutch member 151 and the second clutch member 152 are respectively provided with the first toothed portion 1512 and the second toothed portion 1522, the difficulty in engagement and disengagement of the first clutch member 151 and the second clutch member 152 can be reduced, thereby helping the first clutch member 151 and the second clutch member 152 to be snap-fitted with or disengaged from each other.

According to some embodiments of this application, referring to FIG. 9, along the first direction X, the end of the first clutch member 151 facing the second clutch member 152 is provided with a first inclined surface 1513, the end of the second clutch member 152 facing the first clutch member 151 is provided with a second inclined surface 1523, and the second inclined surface 1523 fits the first inclined surface 1513. The first toothed portion 1512 is disposed on the first inclined surface 1513, and the second toothed portion 1522 is disposed on the second inclined surface 1523.

The second inclined surface 1523 fits the first inclined surface 1513. That is, the first inclined surface 1513 provided on the first clutch member 151 and the second inclined surface 1523 provided on the second clutch member 152 have the same shape, so that the first inclined surface 1513 can fit the second inclined surface 1523.

The first toothed portion 1512 is provided on the first inclined surface 1513, and the second toothed portion 1522 is provided on the second inclined surface 1523. That is, the first toothed portion 1512 protrudes from the first inclined surface 1513, and the second toothed portion 1522 protrudes from the second inclined surface 1523.

In these embodiments, the end of the first clutch member 151 facing the second clutch member 152 is provided with the first inclined surface 1513, and the first toothed portion 1512 is disposed on the first inclined surface 1513. Correspondingly, the end of the second clutch member 152 facing the first clutch member 151 is provided with the second inclined surface 1523 fitting with the first inclined surface 1513, and the second toothed portion 1522 is disposed on the second inclined surface 1523. With this structure, the first toothed portion 1512 and the second toothed portion 1522 may be inclined structures fitting with each other, thereby providing a certain guiding effect, and helping the first toothed portion 1512 to be meshed with the second toothed portion 1522.

In some embodiments, referring to FIG. 9, FIG. 13, and FIG. 14, the first inclined surface 1513 is a concave surface provided on the first clutch member 151, and the second inclined surface 1523 is a convex surface provided on the second clutch member 152.

The first inclined surface 1513 is the concave surface provided on the first clutch member 151. That is, the first inclined surface 1513 is an inclined surface recessed inward and provided at the end of the first clutch member 151 facing the second clutch member 152, so that the first inclined surface 1513 is a conical surface recessed toward the interior of the first clutch member 151.

The second inclined surface 1523 is the convex surface provided on the second clutch member 152. That is, the second inclined surface 1523 is an inclined surface protruding outward and provided at the end of the second clutch member 152 facing the first clutch member 151, so that the second inclined surface 1523 is a conical surface protruding toward the exterior of the second clutch member 152.

In these embodiments, the first inclined surface 1513 is set as the concave surface, and the second inclined surface 1523 is set as the convex surface, so that when the second toothed portion 1522 of the second clutch member 152 is meshed with the first toothed portion 1512 of the first clutch member 151, the second clutch member 152 can be inserted into the first clutch member 151, thereby helping to improve the stability and reliability of mutual engagement between the second clutch member 152 and the first clutch member 151, and reducing the phenomenon of slippage during mutual engagement of the second clutch member 152 and the first clutch member 151.

According to some embodiments of this application, referring to FIG. 5, FIG. 6, and FIG. 9, the anti-loosening assembly 15 may further include an elastic member 153. The elastic member 153 is disposed between the sleeve 11 and the second clutch member 152, and the elastic member 153 is configured to drive the second clutch member 152 to move along the first direction X toward the first clutch member 151, so that the second clutch member 152 is snap-fitted with the first clutch member 151.

The elastic member 153 is disposed between the sleeve 11 and the second clutch member 152, so that the elastic member 153 can provide an elastic force to the second clutch member 152, thereby allowing the second clutch member 152 to have a tendency to move along the first direction X toward the first clutch member 151. Therefore, in actual use, the adjustment member 13 can be driven to rotate relative to the sleeve 11 by only needing to overcome the elastic force of the elastic member 153 and push the second clutch member 152 to be disengaged from the first clutch member 151, so that the locking member 12 is switched between the locked state and the unlocked state. After the switching of the state of the locking member 12 is completed, the force pushing the second clutch member 152 needs to be withdrawn to allow the second clutch member 152 to approach and be snap-fitted with the first clutch member 151 under the elastic force of the elastic member 153, so that the function of limiting rotation between the adjustment member 13 and the sleeve 11 can be achieved.

Optionally, the elastic member 153 may have various structures. For example, the elastic member 153 may be a spring, a leaf spring, elastic rubber, or the like disposed between the sleeve 11 and the second clutch member 152. Exemplarily, in FIG. 9, the elastic member 153 is a spring, and the elastic member 153 is sleeved on the outer side of the guide section 132 of the adjustment member 13.

In these embodiments, the anti-loosening assembly 15 is further provided with the elastic member 153, the elastic member 153 is disposed between the sleeve 11 and the second clutch member 152, and the elastic member 153 can apply a force to the second clutch member 152 along the first direction X toward the first clutch member 151, so that the first clutch member 151 is snap-fitted with the second clutch member 152. The anti-loosening assembly 15 with such structure can further improve the stability of mutual engagement between the first clutch member 151 and the second clutch member 152, thereby reducing the phenomenon of unintended disengagement between the first clutch member 151 and the second clutch member 152. In addition, after the second clutch member 152 and the first clutch member 151 are disengaged from each other, the elastic member 153 can achieve automatic engagement between the second clutch member 152 and the first clutch member 151 without manual intervention, facilitating operation and use.

In some embodiments, still referring to FIG. 5, FIG. 6, and FIG. 9, the adjustment member 13 has a guide section 132. The second clutch member 152 is movably sleeved on the outer side of the guide section 132 along the first direction X. The elastic member 153 is sleeved on the outer side of the guide section 132, and two ends of the elastic member 153 in the first direction X abut against the adjustment member 13 and the second clutch member 152 respectively.

There may be various structures where the elastic member 153 is disposed between the sleeve 11 and the second clutch member 152. For example, the two ends of the elastic member 153 may be directly connected to the sleeve 11 and the second clutch member 152 respectively or indirectly connected to the sleeve 11 and the second clutch member 152 respectively. That is, the elastic member 153 is connected to the sleeve 11 and the second clutch member 152 through other components.

Exemplarily, in FIG. 9, an end of the elastic member 153 close to the second clutch member 152 in the first direction X abuts against the second clutch member 152 through a gasket, and an end of the elastic member 153 away from the second clutch member 152 in the first direction X abuts against the limiting member 14, so that the elastic member 153 indirectly abuts against the sleeve 11.

Optionally, referring to FIG. 5, FIG. 6, and FIG. 9, the anti-loosening assembly 15 may further include a stop block 154. The stop block 154 is disposed in the sleeve 11 and surrounds the outer side of the guide section 132 of the adjustment member 13. The elastic member 153 is sleeved on the outer side of the guide section 132, and the end of the elastic member 153 away from the second clutch member 152 in the first direction X abuts against the limiting member 14 through the stop block 154. The anti-loosening assembly 15 with such structure helps to reduce the assembly difficulty of the elastic member 153 abutting against the limiting member 14, without needing to enlarge the size of the limiting member 14, and also helps to improve the assembly stability of the elastic member 153 between the sleeve 11 and the second clutch member 152, thereby alleviating the phenomenon of the elastic member 153 falling off.

A side of the stop block 154 away from the second clutch member 152 in the first direction X abuts against the limiting member 14. The stop block 154 and the sleeve 11 may be connected to each other, for example, by welding, adhesion, or snap-fitting, or may be not connected to each other. That is, the stop block 154 is movably disposed in the sleeve 11 along the first direction X.

Exemplarily, referring to FIG. 9, a side of the stop block 154 facing the second clutch member 152 in the first direction X is further provided with a slot 1541. The end of the elastic member 153 away from the second clutch member 152 in the first direction X is inserted into the slot 1541 to improve the stability of the elastic member 153 abutting against the stop block 154.

In these embodiments, the elastic member 153 is configured as a structure sleeved on the outer side of the guide section 132 of the adjustment member 13, and the second clutch member 152 is movably sleeved on the outer side of the guide section 132 along the first direction X. This helps the elastic member 153 to apply an elastic force to the second clutch member 152, thereby helping the elastic member 153 to drive the second clutch member 152 to move along the first direction X toward the first clutch member 151. In addition, this allows the guide section 132 to provide a certain guiding effect on the elastic member 153, achieving stable compression of the elastic member 153 along the first direction X, and helping to alleviate the phenomenon of radial deformation or bending of the elastic member 153, thereby improving the stability and reliability of the elastic member 153 during use.

According to some embodiments of this application, referring to FIG. 4, FIG. 7, and FIG. 10, a side of the lock base 300 in the first direction X is provided with a lock hole 310 for insertion of the snap-fit portion 122. The snap-fit portion 122 has a guide inclined surface 1223. The guide inclined surface 1223 is configured to guide the snap-fit portion 122 to be inserted into the lock hole 310.

Exemplarily, in FIG. 7, two sides of the snap-fit portion 122 in its extending direction are each provided with the guide inclined surface 1223.

In these embodiments, the snap-fit portion 122 is provided with the guide inclined surface 1223, so that when there is a deviation during insertion of the snap-fit portion 122 into the lock hole 310 of the lock base 300, the locking member 12 can be guided by the guide inclined surface 1223, thereby facilitating insertion of the snap-fit portion 122 of the locking member 12 into the lock base 300, and improving the operational reliability of the locking mechanism 10.

According to some embodiments of this application, this application further provides a battery assembly 100 including a battery 20 and the locking mechanism 10 according to any one of the above solutions, where the locking mechanism 10 is mounted on the battery 20.

Referring to FIG. 2 and FIG. 3, the battery 20 may include a box 21 and a battery cell 22, where the battery cell 22 is configured to be accommodated in the box 21, and the locking mechanism 10 is mounted on the box 21.

Optionally, there may be various structures in which the locking mechanism 10 is mounted on the battery 20. For example, the locking mechanism 10 may be connected to the battery 20 through structures such as bolted connection, adhesion, welding, or snap-fitting.

In these embodiments, the locking mechanism 10 is mounted on the battery 20, so that the battery 20 can be locked to or unlocked from a lock base 300 of a target member through the locking mechanism 10, so as to achieve the battery swapping function of the battery 20.

According to some embodiments of this application, this application further provides an electric device. Referring to FIG. 2 and FIG. 10, the electric device includes a lock base 300 and the battery assembly 100 according to any one of the above solutions, where the locking mechanism 10 is configured to be engaged with or disengaged from the lock base 300 along the first direction X, and the battery 20 of the battery assembly 100 is configured to supply electrical energy to the electric device.

The electric device may be any device or system using the battery 20 described above.

For ease of description, referring to FIG. 1 and FIG. 2, an electric device according to an embodiment of this application being a vehicle 1000 is used as an example for description.

The vehicle 1000 has a mounting frame 200, and a lock base 300 is mounted on the mounting frame 200. Optionally, the lock base 300 and the mounting frame 200 may be integrally formed or separately disposed. When the lock base 300 and the mounting frame 200 are integrally formed, the lock base 300 is a part of the mounting frame 200. When the lock base 300 and the mounting frame 200 are separately disposed, the lock base 300 may be connected to the mounting frame 200 through structures such as welding, bolted connection, and snap-fitting. Exemplarily, in FIG. 2, the lock base 300 and the mounting frame 200 are separately disposed, and the lock base 300 is connected to the mounting frame 200 in a bolted connection manner.

A battery assembly 100 includes a locking mechanism 10 and a battery 20. The locking mechanism 10 is mounted on the battery 20. The locking mechanism 10 is configured to be locked to or unlocked from the lock base 300, so as to achieve battery swapping of the vehicle 1000.

In some embodiments, referring to FIG. 10, the lock base 300 is provided with a lock hole 310 for insertion of a locking member 12. The lock hole 310 runs through two sides of the lock base 300 along a first direction X. After the locking member 12 is inserted into the lock hole 310, the adjustment member 13 can be rotated to drive a snap-fit portion 122 of the locking member 12 to rotate around an axis extending along the first direction X, so that the snap-fit portion 122 can be engaged with a side surface of the lock base 300 facing away from a sleeve 11, and the locking mechanism 10 is engaged with the lock base 300 in the first direction X, thereby achieving mutual locking between the locking mechanism 10 and the lock base 300. Conversely, when the adjustment member 13 is rotated to drive the snap-fit portion 122 of the locking member 12 to rotate until a projection of the snap-fit portion 122 in the first direction X is located in the lock hole 310, the locking member 12 can exit from the lock hole 310, so that the locking mechanism 10 can be disengaged from the lock base 300 in the first direction X, thereby achieving mutual unlocking between the locking mechanism 10 and the lock base 300.

A cross-section of the lock hole 310 is rectangular. When an extending direction of the snap-fit portion 122 is consistent with a length direction of a cross-section of the lock hole 310, the snap-fit portion 122 can be inserted into the lock hole 310 or exit from the lock hole 310. When the snap-fit portion 122 passes through the lock hole 310 and the extending direction of the snap-fit portion 122 intersects the length direction of the cross-section of the lock hole 310, the snap-fit portion 122 can be engaged with the side surface of the lock base 300 facing away from the sleeve 11.

According to some embodiments of this application, this application further provides a locking apparatus. The locking apparatus includes a lock base 300 and the locking mechanism 10 according to any one of the above solutions. The locking mechanism 10 is configured to be engaged with or disengaged from the lock base 300 along a first direction X.

According to some embodiments of this application, referring to FIG. 4 to FIG. 14, this application provides a locking mechanism 10 configured to be engaged with or disengaged from a lock base 300 along a first direction X. The locking mechanism 10 includes a sleeve 11, a locking member 12, an adjustment member 13, and an anti-loosening assembly 15. The locking member 12 is capable of rotating around an axis extending along the first direction X and is movably disposed in the sleeve 11 along the first direction X. The locking member 12 has a locked state and an unlocked state. The locking member 12 is configured to be engaged with the lock base 300 when in the locked state, so that the locking mechanism 10 is engaged with the lock base 300 along the first direction X, and the locking member 12 is configured to be disengaged from the lock base 300 when in the unlocked state, thereby allowing the locking mechanism 10 to be disengaged from the lock base 300 along the first direction X. The locking member 12 includes a connecting portion 121 and a snap-fit portion 122 connected to each other. The connecting portion 121 has a first connecting section 1211 and a second connecting section 1212 arranged along the first direction X. The first connecting section 1211 is threadedly connected to the adjustment member 13. The snap-fit portion 122 is connected to an end of the second connecting section 1212 away from the first connecting section 1211. The snap-fit portion 122 is configured to be engaged with the lock base 300. A diameter of the first connecting section 1211 is greater than a diameter of the second connecting section 1212. The first connecting section 1211 includes a body portion 1211a and a first external thread 1211b. The body portion 1211a is connected to one end of the second connecting section 1212. The first external thread 1211b protrudes from an outer circumferential surface of the body portion 1211a. An outer diameter of the first external thread 1211b is the diameter of the first connecting section 1211. A first internal thread 133 is provided on an inner circumferential surface of the adjustment member 13. The first internal thread 133 is configured to fit the first external thread 1211b. A diameter of the body portion 1211a is greater than or equal to a diameter of the second connecting section 1212. The snap-fit portion 122 is sleeved on an outer side of the second connecting section 1212, and the snap-fit portion 122 is threadedly connected to the second connecting section 1212. The snap-fit portion 122 is located outside the sleeve 11, and the snap-fit portion 122 protrudes from an outer circumferential surface of the connecting portion 121 along its extending direction. The extending direction of the snap-fit portion 122 is perpendicular to the first direction X. The snap-fit portion 122 has a guide inclined surface 1223. The guide inclined surface 1223 is configured to guide the snap-fit portion 122 to be inserted into a lock hole 310. The adjustment member 13 is rotatably connected inside the sleeve 11 around the axis extending along the first direction X. The adjustment member 13 can drive the connecting portion 121 to rotate by rotating relative to the sleeve 11, so that the snap-fit portion 122 is snap-fitted with or disengaged from the lock base 300, and the locking member 12 is switched between the locked state and the unlocked state. The sleeve 11 is provided with a first limiting portion 114. The connecting portion 121 is provided with a second limiting portion 1213. The first limiting portion 114 and the second limiting portion 1213 fit to limit a rotation angle of the connecting portion 121. The first limiting portion 114 and the second limiting portion 1213 are further configured to fit to guide the connecting portion 121 to move along the first direction X when the adjustment member 13 rotates relative to the sleeve 11, so that the locking member 12 moves between a first position and a second position along the first direction X. When the locking member 12 is located at the first position, the locking member 12 is in the locked state, so that the snap-fit portion 122 can be snap-fitted with the lock base 300. When the locking member 12 is located at the second position, the locking member 12 is in the unlocked state, so that the snap-fit portion 122 can be disengaged from the lock base 300. The first limiting portion 114 is a limiting groove provided on an inner circumferential surface of the sleeve 11. The limiting groove runs through an outer circumferential surface of the sleeve 11 along a radial direction of the sleeve 11. The second limiting portion 1213 is a protrusion protruding from the outer circumferential surface of the connecting portion 121. The protrusion is at least partially accommodated in the limiting groove. The limiting groove includes a first groove section 1141, a second groove section 1142, and a third groove section 1143 connected in sequence. The first groove section 1141 and the third groove section 1143 both extend along the first direction X. The first groove section 1141 and the third groove section 1143 are spaced apart along a circumferential direction of the connecting portion 121, and the first groove section 1141 and the third groove section 1143 are spaced apart along the first direction X. Along the first direction X, the third groove section 1143 is closer to the snap-fit portion 122 than the first groove section 1141. When the locking member 12 is located at the first position, the protrusion is located in the first groove section 1141. When the locking member 12 is located at the second position, the protrusion is located in the third groove section 1143. The anti-loosening assembly 15 includes a first clutch member 151, a second clutch member 152, and an elastic member 153. The first clutch member 151 and the second clutch member 152 are arranged along the first direction X. The first clutch member 151 is threadedly connected inside the sleeve 11. The second clutch member 152 is movably sleeved on a guide section 132 of the adjustment member 13 along the first direction X. A cross-section of the guide section 132 perpendicular to the first direction X is polygonal. An outer circumferential surface of the guide section 132 fits an inner circumferential surface of the second clutch member 152, so that the second clutch member 152 is circumferentially locked to the adjustment member 13. Along the first direction X, an end of the first clutch member 151 facing the second clutch member 152 is provided with a first toothed portion 1512. An end of the second clutch member 152 facing the first clutch member 151 is provided with a second toothed portion 1522. The second toothed portion 1522 is configured to be meshed with the first toothed portion 1512, so that the second clutch member 152 is snap-fitted with the first clutch member 151. The elastic member 153 is sleeved on an outer side of the guide section 132, and two ends of the elastic member 153 in the first direction X abut against the adjustment member 13 and the second clutch member 152 respectively.

It should be noted that, without conflicts, the embodiments and features in the embodiments in this application may be combined with each other.

The above are only preferred embodiments of this application and are not used to limit this application. For those skilled in the art, this application can have various changes and modifications. Any modifications, equivalent replacements, improvements, and the like made within the spirit and principles of this application should all within the protection scope of this application.

## Claims

1. A locking mechanism configured to be engaged with or disengaged from a lock base along a first direction, wherein the locking mechanism comprises:
a sleeve;
a locking member movably disposed in the sleeve, wherein the locking member has a locked state and an unlocked state, the locking member is configured to be snap-fitted with the lock base when in the locked state, so that the locking mechanism is engaged with the lock base along the first direction, and the locking member is configured to be disengaged from the lock base when in the unlocked state, so as to allow the locking mechanism to be disengaged from the lock base along the first direction; and
an adjustment member rotatably connected inside the sleeve around an axis extending along the first direction, wherein the adjustment member is configured to, when rotating relative to the sleeve, drive the locking member to move relative to the sleeve, so that the locking member is switched between the locked state and the unlocked state;
wherein the locking member comprises a connecting portion and a snap-fit portion connected to each other, the connecting portion has a first connecting section and a second connecting section arranged along the first direction, the first connecting section is threadedly connected to the adjustment member, the snap-fit portion is connected to an end of the second connecting section away from the first connecting section, the snap-fit portion is configured to be snap-fitted with the lock base, and a diameter of the first connecting section is greater than a diameter of the second connecting section.

2. The locking mechanism according to claim 1, wherein the first connecting section comprises a body portion and a first external thread, the body portion is connected to one end of the second connecting section, the first external thread protrudes from an outer circumferential surface of the body portion, and an outer diameter of the first external thread is the diameter of the first connecting section; and
a first internal thread is provided on an inner circumferential surface of the adjustment member, and the first internal thread is configured to fit the first external thread.

3. The locking mechanism according to claim 2, wherein a diameter of the body portion is greater than or equal to a diameter of the second connecting section.

4. The locking mechanism according to any one of claims 1 to 3, wherein the snap-fit portion is detachably connected to the second connecting section.

5. The locking mechanism according to claim 4, wherein the snap-fit portion is sleeved on an outer side of the second connecting section, and the snap-fit portion is threadedly connected to the second connecting section.

6. The locking mechanism according to any one of claims 1 to 5, wherein the snap-fit portion is located outside the sleeve, and the snap-fit portion protrudes from an outer circumferential surface of the connecting portion along its extending direction, and the extending direction of the snap-fit portion is perpendicular to the first direction; and
the adjustment member is able to drive the connecting portion to rotate by rotating relative to the sleeve, so that the snap-fit portion is snap-fitted with or disengaged from the lock base, and the locking member is switched between the locked state and the unlocked state.

7. The locking mechanism according to claim 6, wherein the sleeve is provided with a first limiting portion, the connecting portion is provided with a second limiting portion, and the first limiting portion and the second limiting portion fit to limit a rotation angle of the connecting portion.

8. The locking mechanism according to claim 7, wherein the first limiting portion and the second limiting portion are further configured to fit to guide the connecting portion to move along the first direction when the adjustment member rotates relative to the sleeve, so that the locking member moves between a first position and a second position along the first direction;
when the locking member is located at the first position, the locking member is in the locked state, so that the snap-fit portion is able to be snap-fitted with the lock base; and
when the locking member is located at the second position, the locking member is in the unlocked state, so that the snap-fit portion is able to be disengaged from the lock base.

9. The locking mechanism according to claim 8, wherein the first limiting portion is a limiting groove provided on an inner circumferential surface of the sleeve, the second limiting portion is a protrusion protruding from the outer circumferential surface of the connecting portion, and the protrusion is at least partially accommodated in the limiting groove.

10. The locking mechanism according to claim 9, wherein the limiting groove comprises a first groove section, a second groove section, and a third groove section connected in sequence, the first groove section and the third groove section both extend along the first direction, the first groove section and the third groove section are spaced apart along a circumferential direction of the connecting portion, the first groove section and the third groove section are spaced apart along the first direction, and along the first direction, the third groove section is closer to the snap-fit portion than the first groove section; and
when the locking member is located at the first position, the protrusion is located in the first groove section, and when the locking member is located at the second position, the protrusion is located in the third groove section.

11. The locking mechanism according to claim 9 or 10, wherein the limiting groove runs through an outer circumferential surface of the sleeve along a radial direction of the sleeve.

12. The locking mechanism according to any one of claims 1 to 11, wherein the locking mechanism further comprises:
an anti-loosening assembly disposed between the sleeve and the adjustment member, wherein the anti-loosening assembly is configured to selectively lock the adjustment member to the sleeve, so as to limit rotation of the adjustment member relative to the sleeve.

13. The locking mechanism according to claim 12, wherein the anti-loosening assembly comprises:
a first clutch member disposed in the sleeve; and
a second clutch member disposed on the adjustment member;
wherein the first clutch member and the second clutch member are configured to: limit rotation of the adjustment member relative to the sleeve when snap-fitted with each other; and allow rotation of the adjustment member relative to the sleeve when disengaged from each other.

14. The locking mechanism according to claim 13, wherein the first clutch member and the second clutch member are arranged along the first direction; and
the first clutch member is fixed to the sleeve, the second clutch member is circumferentially locked to the adjustment member, and the second clutch member is movably disposed on the adjustment member along the first direction, so that the second clutch member is able to be snap-fitted with or disengaged from the first clutch member.

15. The locking mechanism according to claim 14, wherein the adjustment member has a guide section, and the second clutch member is movably sleeved on an outer side of the guide section along the first direction; and
a cross-section of the guide section perpendicular to the first direction is polygonal, and an outer circumferential surface of the guide section fits an inner circumferential surface of the second clutch member, so that the second clutch member is circumferentially locked to the adjustment member.

16. The locking mechanism according to claim 14 or 15, wherein along the first direction, an end of the first clutch member facing the second clutch member is provided with a first toothed portion, an end of the second clutch member facing the first clutch member is provided with a second toothed portion, and the second toothed portion is configured to be meshed with the first toothed portion, so that the second clutch member is snap-fitted with the first clutch member.

17. The locking mechanism according to claim 16, wherein along the first direction, the end of the first clutch member facing the second clutch member is provided with a first inclined surface, the end of the second clutch member facing the first clutch member is provided with a second inclined surface, and the second inclined surface fits the first inclined surface;
wherein the first toothed portion is disposed on the first inclined surface, and the second toothed portion is disposed on the second inclined surface.

18. The locking mechanism according to claim 17, wherein the first inclined surface is a concave surface provided on the first clutch member, and the second inclined surface is a convex surface provided on the second clutch member.

19. The locking mechanism according to any one of claims 14 to 18, wherein the anti-loosening assembly further comprises:
an elastic member disposed between the sleeve and the second clutch member, wherein the elastic member is configured to drive the second clutch member to move along the first direction toward the first clutch member, so that the second clutch member is snap-fitted with the first clutch member.

20. The locking mechanism according to claim 19, wherein the adjustment member has a guide section, and the second clutch member is movably sleeved on an outer side of the guide section along the first direction; and
the elastic member is sleeved on the outer side of the guide section, and two ends of the elastic member in the first direction abut against the adjustment member and the second clutch member respectively.

21. The locking mechanism according to any one of claims 1 to 20, wherein a side of the lock base in the first direction is provided with a lock hole for insertion of the snap-fit portion; and
the snap-fit portion has a guide inclined surface, and the guide inclined surface is configured to guide the snap-fit portion to be inserted into the lock hole.

22. A battery assembly, comprising:
a battery; and
the locking mechanism according to any one of claims 1 to 21, wherein the locking mechanism is mounted on the battery.

23. An electric device, comprising:
a lock base; and
the battery assembly according to claim 22, wherein the locking mechanism is configured to be engaged with or disengaged from the lock base along the first direction, and the battery is configured to supply electrical energy.

24. A locking apparatus, comprising:
a lock base; and
the locking mechanism according to any one of claims 1 to 21, wherein the locking mechanism is configured to be engaged with or disengaged from the lock base along the first direction.
